# EUROPÄISCHE PATENTSCHRIFT

(11) **EP 3 515 623 B1**
(45) Veröffentlichungstag und Bekanntmachung des Hinweises auf die Patenterteilung: **12.08.2020**
(21) Anmeldenummer: 17772418.4
(22) Anmeldetag: 26.09.2017
(51) Int. Cl.: B21D 28/14, B21D 28/16, B21D 28/34, B24B 3/60

(54) **WERKZEUG UND WERKZEUGMASCHINE SOWIE VERFAHREN ZUM BEARBEITEN VON PLATTENFÖRMIGEN WERKSTÜCKEN**
TOOL AND MACHINE TOOL AND METHOD FOR MACHINING PLANAR WORKPIECES
OUTIL ET MACHINE-OUTIL AINSI QUE PROCÉDÉ D'USINAGE DE PIÈCES EN FORME DE PLAQUE, EN PARTICULIER DE TÔLES

(30) Priorität: 26.09.2016 DE 102016118175; 21.10.2016 DE 102016120141
(43) Veröffentlichungstag der Anmeldung: 31.07.2019
(73) Patentinhaber: Trumpf Werkzeugmaschinen GmbH + Co. KG, 71254 Ditzingen (DE)
(72) Erfinder: WILHELM, Markus, 70839 Gerlingen (DE); HANK, Rainer, 71735 Eberdingen (DE); KLINKHAMMER, Marc, 71254 Ditzingen (DE); SCHINDEWOLF, Leonard, 71277 Rutesheim (DE); OCKENFUSS, Simon, 71034 Böblingen (DE); KAPPES, Jens, 70771 Leinfelden-Echterdingen (DE); TRÄNKLEIN, Dennis, 71154 Nufringen (DE); TATARCZYK, Alexander, 71229 Höfingen (DE); NEUPERT, Jörg, 70499 Stuttgart (DE); BITTO, Dominik, 70825 Münchingen (DE); MAATZ, Markus, 70771 Leinfelden-Echterdingen (DE); JAKISCH, Christian, 95488 Eckersdorf (DE)
(74) Vertreter: Mammel und Maser
(86) Internationale Anmeldenummer: PCT/EP2017/074308
(87) Internationale Veröffentlichungsnummer: WO 2018/055187

(56) Entgegenhaltungen:
- EP-B1- 2 527 058
- DE-A1- 3 234 215
- DE-A1-102006 049 044

## Beschreibung

Die Erfindung betrifft ein Werkzeug und eine Werkzeugmaschine sowie ein Verfahren zum Bearbeiten von plattenförmigen Werkstücken, vorzugsweise von Blechen.

Eine derartige Werkzeugmaschine ist aus der EP 2 527 058 B1 bekannt. Diese Druckschrift offenbart eine Werkzeugmaschine in Form einer Presse zum Bearbeiten von Werkstücken, wobei ein Oberwerkzeug an einer Hubvorrichtung vorgesehen ist, welche gegenüber einem zu bearbeitenden Werkstück entlang einer Hubachse in Richtung auf das Werkstück und in der Gegenrichtung verfahrbar ist. In der Hubachse und dem Oberwerkzeug gegenüberliegend ist ein Unterwerkzeug vorgesehen, welches zu einer Unterseite positioniert ist. Eine Hubantriebsvorrichtung für eine Hubbewegung des Oberwerkzeugs wird durch ein Keilgetriebe angesteuert. Die Hubantriebsvorrichtung mit dem daran angeordneten Oberwerkzeug ist längs einer Positionierachse mit einem motorischen Antrieb verfahrbar. Das Unterwerkzeug wird dabei synchron einem motorischen Antrieb zum Oberwerkzeug verfahren.

Die DE 10 2006 049 044 A1 wird als nächstkommender Stand der Technik angesehen und bildet den Oberbegriff des Anspruchs 1. Aus der DE 10 2006 049 044 A1 ist ein Werkzeug zum Bearbeiten von plattenförmigen Werkstücken bekannt, welches beispielsweise an einer Werkzeugmaschine gemäß der EP 2 527 058 B1 einsetzbar ist. Solche Werkzeuge zum Schneiden und/oder Umformen von plattenförmigen Werkstücken umfassen einen Stanzstempel und eine Stanzmatrize. Zur Bearbeitung eines zwischen dem Stanzstempel und der Stanzmatrize angeordneten Werkstücks werden diese in einer Hubrichtung aufeinander zubewegt. Durch die Bearbeitung von Werkstücken tritt ein Verschleiß an dem Werkzeug ein. Bei einem Stanzstempel kann es zum einen zu einer Verrundung einer Schneidkante kommen. Ein solcher Verschleiß zeichnet sich beim bearbeiteten Werkstück als ein unerwünschter Stanzgrat ab. Des Weiteren kann bei einem solchen Stanzstempel ein sogenannter Mantelflächenverschleiß auftreten, bei welchem eine an die Schneidkante des Werkzeugkörpers beziehungsweise des Stanzstempels sich anschließende Mantelfläche Aufwerfungen aufweist. Zum Nachschleifen der Werkzeuge werden das Ober- und Unterwerkzeug aus der Werkzeugmaschine entnommen und getrennt dazu in einer Schleifmaschine nachgeschliffen. Dadurch fällt ein zusätzlicher Arbeitsaufwand an. Zudem wird die Fertigung von Werkstücken in der Werkzeugmaschine durch das Ein- und Ausbauen des nachzuschleifenden Werkzeuges unterbrochen oder ist zumindest aufwendiger zu organisieren.

Aus der DE 32 34 215 A1 ist eine Flachschleifmaschine für Stanzwerkzeuge bekannt, bei der eine Werkstückspannvorrichtung drehbar gelagert ist, wobei die Achse der Werkstückspannvorrichtung parallel im Abstand zur Antriebsachse der Schleifscheibe liegt. Um eine weitgehend automatische Bearbeitung des Werkstücks zu erreichen, ist eine Steuerungsvorrichtung für die Zustellung der Schleifscheibe vorgesehen, die mit einem Abtastglied entlang einer Steuerkurve für die zu schleifende Fläche des Werkstücks verbunden ist.

Der Erfindung liegt deshalb die Aufgabe zugrunde, ein Werkzeug sowie eine Werkzeugmaschine als auch ein Verfahren zum Bearbeiten von plattenförmigen Werkstücken vorzugschlagen, durch welche die Flexibilität und Produktivität erhöht ist.

Diese Aufgabe wird durch ein Werkzeug zum Bearbeiten von plattenförmigen Werkstücken, insbesondere von Blechen, mit den Merkmalen des Anspruchs 1 gelöst. Das Werkzeug zum Bearbeiten von plattenförmigen Werkstücken weist an dem Grundkörper des Unterwerkzeugs in Richtung auf das Oberwerkzeug weisend und/oder an einem dem Werkzeugkörper des Oberwerkzeuges zugeordneten Abstreifer in Richtung auf das Unterwerkezug weisend und/oder an einem Grundkörper des Oberwerkzeuges in Richtung auf das Unterwerkzeug weisend ein Schleifwerkzeug auf. Eine solche Anordnung des Schleifwerkzeuges an dem Werkzeug zum Bearbeiten von plattenförmigen Werkstücken, wie beispielsweise zum Stanzen, Umformen oder dergleichen, ermöglicht, dass nach einem oder mehreren Bearbeitungsschritten des plattenförmigen Werkzeuges der Werkzeugkörper, wie beispielsweise ein Stanzstempel, und der Gegenwerkzeugkörper, wie beispielsweise eine Stanzmatrize, unmittelbar darauffolgend nachgeschliffen und geschärft werden können. Nach dem Nachschleifen des Werkzeugkörpers und/oder Gegenwerkzeugkörpers kann die Bearbeitung der plattenförmigen Werkstücke fortgeführt werden, ohne dass eine Unterbrechung in der Fertigung durch die Entnahme des Werkzeuges aus der Werkzeugmaschine und eines anschließenden Einbaus in die Werkzeugmaschine nach dem Nachschleifen erforderlich ist.

Eine bevorzugte Ausgestaltung des Werkzeuges sieht vor, dass das Schleifwerkzeug zumindest einen Schleifkörper aufweist, der senkrecht, parallel und/oder geneigt zur Positionsachse des Oberwerkzeugs und/oder Unterwerkzeugs ausgerichtet ist. Dadurch kann in Abhängigkeit der Ausrichtung einer Bearbeitungskante, insbesondere Schneidkante eines Werkzeugkörpers und/oder Gegenschneidkante des Gegenwerkzeugkörpers, der Schleifkörper entsprechend ausgerichtet sein, um das Nachschleifen oder Nachschärfen des Werkzeugkörpers oder Gegenwerkzeugkörpers zu ermöglichen, ohne dass das Werkzeug aus der Bearbeitungsmaschine zu entfernen ist. Vielmehr kann das Werkzeug in der jeweiligen Antriebsanordnung der Bearbeitungsmaschine verbleiben, so dass nur eine kurze Unterbrechung in der Bearbeitung von Werkstücken durch die Nachschleifdauer erforderlich ist. Durch die Ausrichtung des Schleifkörpers kann sowohl eine bspw. verrundete Schneidkante als auch ein Mantelflächenverschleiß bei einem Stanzstempel bearbeitet werden.

Eine weitere vorteilhafte Ausgestaltung des Werkzeugs sieht vor, dass das Schleifwerkzeug als ein Schleifeinsatz, insbesondere in Form einer Schleifscheibe oder eines Schleifringes, ausgebildet ist. Dadurch können einfache geometrische Formen zur Bildung des Schleifwerkzeugs ermöglicht werden und die Schleifbearbeitung analog zu der in einer separat vorgesehenen Schleifmaschine ermöglicht sein.

Vorteilhafterweise sind die Schleifwerkzeuge auswechselbar an dem Oberwerkzeug und/oder dem Unterwerkzeug und/oder dem Abstreifers vorgesehen. Dadurch kann in schneller Weise eine Umrüstung des Werkzeuges erfolgen, sobald das Schleifwerkzeug selbst verschlissen ist. Im Falle eines Abstreifers kann auch vorgesehen sein, dass dieser vollständig ausgetauscht wird.

Des Weiteren ist bevorzugt vorgesehen, dass an einer der Arbeitsoberfläche des zumindest einen Schleifkörpers gegenüberliegenden Seite ein elastischer Körper vorgesehen ist. Mittels diesem elastischen Körper wird der Schleifkörper an einen Grundkörper des Oberwerkzeugs oder Unterwerkzeugs oder des Abstreifers befestigt. Bevorzugt ist die flächige Erstreckung des elastischen Körpers in der Form des Schleifkörpers. Ein solcher elastischer Körper weist den Vorteil auf, dass ein Ausgleich der Lage des Schleifkörpers zum nachzuschleifenden Werkzeugkörper gegeben ist, da die Position des Werkzeugkörpers zum Schleifkörper toleranzbehaftet sein kann. Dadurch wird ermöglicht, dass die Arbeitsoberfläche beziehungsweise Schleiffläche des Schleifkörpers parallel zur zu schleifenden Fläche wie beispielsweise einer Stempelstirnfläche oder Mantelfläche eines Werkzeugkörpers ausgerichtet werden kann. Als elastischer Körper kann ein gummielastisches Material oder ein schwammförmiges Material oder dergleichen eingesetzt werden.

Bei einer Anordnung des Schleifwerkzeuges an oder in dem Grundkörper des Unterwerkzeugs ist bevorzugt vorgesehen, dass der zumindest eine Schleifkörper des Schleifwerkzeugs gegenüber einer Auflagefläche am Grundkörper des Unterwerkzeuges vertieft angeordnet ist. Dies ermöglicht, dass ein Aufliegen des zu bearbeitenden Werkstücks und ein Entlangführen des zu bearbeitenden Werkstücks auf der Auflagefläche des Unterwerkzeugs ermöglicht ist, jedoch die aufliegende Seite des Werkstückes durch das Schleifwerkzeug nicht beschädigt wird.

Vorteilhafterweise ist an dem Unterwerkzeug eine Öffnung vorgesehen, die zumindest eine Schneidkante als Gegenwerkzeugkörper aufweist und das zumindest eine Schleifwerkzeug die Öffnung umgibt. Dies ermöglicht eine kompakte Anordnung. Darüber hinaus kann entstehender Schleifstaub über diese Öffnung nach unten abgesaugt werden. Bevorzugt ist die Auflagefläche geringfügig um das einzubringende Schleifwerkzeug reduziert, ohne dass eine Beeinträchtigung während der Bearbeitung der Werkstücke, insbesondere der Stanzbearbeitung, gegeben ist.

Des Weiteren ist bevorzugt vorgesehen, dass in dem Grundkörper des Unterwerkzeugs ein oder mehrere Schleifwerkzeuge mit voneinander abweichender Körnung parallel zur Auflagefläche ausgerichtet sind. Beispielsweise kann dadurch ein erster Schleifkörper in Form eines Schleifringes für eine Schruppbearbeitung und ein weiterer Schleifkörper in Form eines Schleifringes für eine Schlichtbearbeitung vorgesehen sein. Dadurch kann eine senkrecht zur Positionsachse des Werkzeugkörpers ausgerichtete Fläche bearbeitet werden, insbesondere eine Stempelstirnfläche eines Stanzstempels.

Bevorzugt ist in der Vertiefung im Grundkörper am Unterwerkzeug ein Schleifkörper mit einer radial ausgerichteten Arbeitsoberfläche vorgesehen. Bei dem radial ausgerichteten Schleifkörper kann beispielsweise eine Mantelfläche eines runden Werkzeugkörpers, wie beispielsweise bei einem Stanzstempel, nachgeschliffen werden.

Bei der Positionierung des Schleifwerkzeuges an einer Unterseite des Abstreifers ist einer Öffnung im Abstreifer für den Werkzeugkörper des Oberwerkzeuges zugeordnet ein Abstandselement vorgesehen, welches gegenüber dem Schleifwerkzeug in Richtung auf das Unterwerkzeug hervorsteht. Dies ermöglicht, dass beim Niederhalten des Werkstückes bei einer Hubbewegung des Oberwerkzeuges von diesem weg ein Verkratzen der Oberfläche des Werkstückes durch das Abstandselement verhindert wird. Das Abstandselement kann aus einem weichen metallischen Material oder aus Kunststoff ausgebildet sein.

Gemäß einer weiteren alternativen Ausführungsform des Werkzeugs ist vorgesehen, dass das Unterwerkzeug von einem Adapterring mit einem Schleifwerkzeug umgeben ist. Dieser Adapterring ist vorzugsweise auswechselbar zum Unterwerkzeug, so dass ein einfacher Wechsel bei einer Abnutzung des Unterwerkzeugs ermöglicht ist.

Die der Erfindung zugrundeliegende Aufgabe wird des Weiteren durch eine Werkzeugmaschine gelöst, bei der ein Werkzeug nach einem der vorbeschriebenen Ausführungsformen vorgesehen ist und für eine Schleifbearbeitung des Ober- und/oder Unterwerkzeugs eine Verfahrbewegung des Oberwerkzeuges und/oder Unterwerkzeuges entlang der oberen oder unteren Positionsachse ansteuerbar ist, bis die Positionsachsen des Ober- und/oder Unterwerkzeugs parallel zueinander versetzt angeordnet sind. Durch diese seitliche Verfahrbewegung des Oberwerkzeuges und/oder des Unterwerkzeuges werden der Werkzeugkörper und Gegenwerkzeugkörper versetzt zueinander angeordnet beziehungsweise ein Abstreifer versetzt zum Unterwerkzeug angeordnet, so dass darauffolgend eine Zuordnung des Schleifwerkzeuges zum Werkzeugkörper oder Gegenwerkzeugkörper für eine Schleifbearbeitung gegeben ist. Dadurch kann beispielsweise während einem Be- und Entladevorgang eines plattenförmigen Werkstückes in der Werkzeugmaschine ein Nachschleifen des Werkzeugkörpers oder Gegenwerkzeugkörpers erfolgen, ohne dass eine tatsächliche Unterbrechung in der Produktion notwendig ist.

Die der Erfindung zugrundeliegende Aufgabe wird des Weiteren durch ein Verfahren zum Bearbeiten von plattenförmigen Werkstücken gelöst, bei dem ein Werkzeug eingesetzt wird, bei welchem ein Schleifwerkzeug an einem Grundkörper des Oberwerkzeugs, an einem Grundkörper des Unterwerkzeuges und/oder an einem Abstreifer, der dem Oberwerkzeug zugeordnet ist, vorgesehen ist. Dadurch ist ermöglicht, dass unmittelbar nach dem Bearbeiten der Werkstücke ein Nachschleifen des Werkzeugkörpers des Oberwerkzeugs und/oder Gegenwerkzeugkörpers des Unterwerkzeuges ermöglicht wird, ohne dass ein Wechsel des Werkzeuges erforderlich ist. Dadurch kann die Aufbereitung des Werkzeuges beziehungsweise ein Nachschleifen in die Produktion der Werkstücke integriert werden, so dass etwaige Stillstandzeiten des Werkzeuges beim Zuführen eines neuen plattenförmigen Werkstückes und/oder Abführen von Gutteilen oder Abfallteilen für das Nachschleifen des Ober- und/oder Unterwerkzeuges genutzt werden können. Auch Produktionsunterbrechungen können verhindert werden, wenn es eine Anforderung ist, das Werkzeug nach einer bestimmten Anzahl an Bearbeitungshüben nachzuschleifen und dieses Kriterium während dem Bearbeiten desselben plattenförmigen Werkstücks eintritt.

Bevorzugt ist vorgesehen, dass das Oberwerkzeug mit einer Verfahrbewegung entlang der oberen Positionierachse und/oder das Unterwerkzeug mit einer Verfahrbewegung entlang der unteren Positionierachse relativ zueinander angesteuert werden. Dies ermöglicht in einfacher Weise eine Positionierung des Werkzeugkörpers oder Gegenwerkzeugkörpers zum Schleifwerkzeug am jeweiligen Oberwerkzeug und Unterwerkzeug für den nachfolgenden Schleifprozess.

Des Weiteren ist bevorzugt vorgesehen, dass das Oberwerkzeug und/oder Unterwerkzeug rotierend, vorzugsweise gegenläufig rotierend, um deren Positionsachsen angesteuert werden. Dadurch kann die Schleifbearbeitung zeitlich verkürzt werden.

Eine weitere bevorzugte Ausführungsform des Verfahrens sieht vor, dass das Oberwerkzeug und Unterwerkzeug aus einer Bearbeitungsposition relativ zueinander entlang den Positionierachsen verfahren werden, so dass die Positionsachsen parallel zueinander versetzt ausgerichtet sind und dass ein beispielsweise als Stanzstempel ausgebildeter Werkzeugkörper des Oberwerkzeuges und/oder ein Unterwerkzeug entlang der Positionsachsen durch eine Hubbewegung aufeinander zubewegt werden und der Stanzstempel auf das Schleifwerkzeug aufgesetzt wird und eine Verrundung einer Stempelstirnfläche des Stanzstempels bearbeitet wird. Vorzugsweise kann nach der ersten Schleifbearbeitung eine nachfolgende Schleifbearbeitung angesteuert werden, indem das Ober- und/oder Unterwerkzeug voneinander abgehoben werden und darauffolgend eine weitere Verfahrbewegung des Ober- und/oder Unterwerkzeugs entlang deren Positionierachsen angesteuert wird, so dass der Stanzstempel zum weiteren Schleifkörper des Schleifwerkzeugs ausgerichtet ist, um eine nachfolgende Bearbeitung, wie beispielsweise eine Schlichtbearbeitung, auf die zuerst erfolgte Schruppbearbeitung durchzuführen.

Des Weiteren kann vorgesehen sein, dass der als Stanzstempel ausgebildete Werkzeugkörper des Oberwerkzeuges zu einem radial ausgerichteten Schleifkörper des Schleifwerkzeuges positioniert wird und eine Mantelfläche des Stanzstempels geschliffen wird.

Zur gleichmäßigen Schleifbearbeitung werden bevorzugt das Oberwerkzeug und Unterwerkzeug rotierend, insbesondere gegenläufig rotierend, angetrieben.

Eine weitere Ausgestaltung des Verfahrens sieht vor, dass bei der Anordnung des Schleifwerkzeuges an einer Unterseite des Abstreifers das Oberwerkzeug relativ zum Unterwerkzeug entlang der Positionierachsen verfahren werden, bis ein Abstandselement des Abstreifers außerhalb des Grundkörpers zum Unterwerkzeug positioniert wird und anschließend durch eine Hubbewegung das Schleifwerkzeug des Abstreifers in eine Schleifposition zum Unterwerkzeug übergeführt und eine Gegenschneidkante am Gegenwerkzeugkörper bearbeitet wird.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht der erfindungsgemäßen Werkzeugmaschine,
Figur 2 eine schematisierte Darstellung des grundsätzlichen Aufbaus einer Hubantriebsvorrichtung und eines motorischen Antriebes gemäß Figur 1,
Figur 3 ein schematisches Diagramm einer überlagerten Hubbewegung in Y- und Z-Richtung des Stößels gemäß Figur 1,
Figur 4 ein schematisches Diagramm einer weiteren überlagerten Hubbewegung in Y- und Z-Richtung des Stößels gemäß Figur 1,
Figur 5 eine schematische Ansicht von oben auf die Werkzeugmaschine gemäß Figur 1 mit Werkstückauflageflächen,
Figur 6 eine perspektivische Ansicht eines Werkzeuges mit einem an dem Unterwerkzeug angeordneten Schleifwerkzeug in einer Bearbeitungsposition,
Figur 7 eine perspektivische Ansicht des Werkzeugs gemäß Figur 6 in einer Schleifposition,
Figur 8 eine perspektivische Ansicht des Werkzeugs gemäß Figur 6 in einer weiteren Schleifposition,
Figur 9 eine schematisch vergrößerte Ansicht des Details X in Figur 8,
Figur 10 eine perspektivische Ansicht einer alternativen Ausgestaltung des Unterwerkzeuges zu Figur 6,
Figur 11 eine schematische Ansicht auf das Werkzeug gemäß Figur 6 mit einem Abstreifer,
Figur 12 eine perspektivische Ansicht des Werkzeugs gemäß Figur 11 in einer Schleifposition,
Figur 13 eine perspektivische Ansicht einer alternativen Ausführungsform eines Oberwerkzeuges und
Figur 14 eine schematische Schnittdarstellung des Oberwerkzeugs gemäß Figur 13.

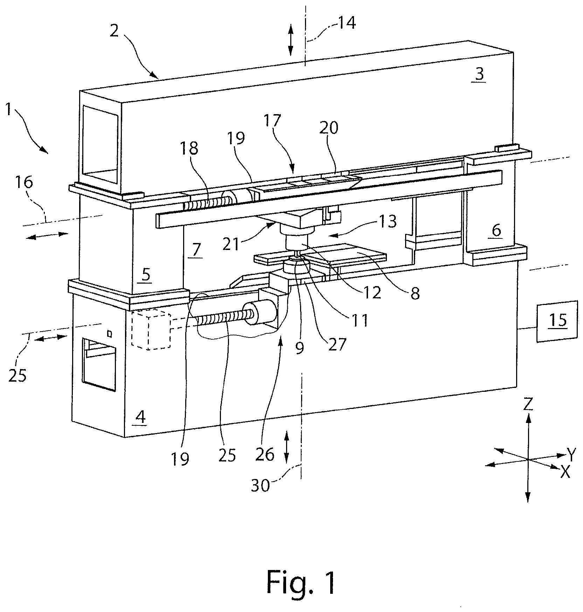

In Figur 1 ist eine Werkzeugmaschine 1 dargestellt, welche als Stanzpresse ausgebildet ist. Diese Werkzeugmaschine 1 umfasst eine Tragstruktur mit einem geschlossenen Maschinenrahmen 2. Dieser umfasst zwei horizontale Rahmenschenkel 3, 4 sowie zwei vertikale Rahmenschenkel 5 und 6. Der Maschinenrahmen 2 umschließt einen Rahmeninnenraum 7, der den Arbeitsbereich der Werkzeugmaschine 1 mit einem Oberwerkzeug 11 und einem Unterwerkzeug 9 bildet.

Die Werkzeugmaschine 1 dient zur Bearbeitung von plattenförmigen Werkstücken 10, welche der Einfachheit halber in Figur 1 nicht dargestellt sind und können zu Bearbeitungszwecken im Rahmeninnenraum 7 angeordnet werden. Ein zu bearbeitendes Werkstück 10 wird auf eine im Rahmeninnenraum 7 vorgesehene Werkstückabstützung 8 abgelegt. In einer Aussparung der Werkstückabstützung 8 ist am unteren horizontalen Rahmenschenkel 4 des Maschinenrahmens 2 das Unterwerkzeug 9 beispielsweise in Form einer Stanzmatrize gelagert. Diese Stanzmatrize kann mit einer Matrizenöffnung versehen sein. Bei einer Stanzbearbeitung taucht in die Matrizenöffnung des als Stanzmatrize ausgebildeten Unterwerkzeuges das als Stanzstempel ausgebildete Oberwerkzeug 11 ein.

Das Oberwerkzeug 11 und Unterwerkzeug 9 kann anstelle von einem Stanzstempel und einer Stanzmatrize auch als ein Biegestempel sowie eine Biegematrize zum Umformen von Werkstücken 10 eingesetzt werden.

Das Oberwerkzeug 11 ist in einer Werkzeugaufnahme an einem unteren Ende eines Stößels 12 fixiert. Der Stößel 12 ist Teil einer Hubantriebsvorrichtung 13, mittels derer das Oberwerkzeug 11 in eine Hubrichtung entlang einer Hubachse 14 bewegt werden kann. Die Hubachse 14 verläuft in Richtung der Z-Achse des Koordinatensystems einer in Figur 1 angedeuteten numerischen Steuerung 15 der Werkzeugmaschine 1. Senkrecht zur Hubachse 14 kann die Hubantriebsvorrichtung 13 längs einer Positionierachse 16 in Richtung des Doppelpfeils bewegt werden. Die Positionierachse 16 verläuft in Richtung der Y-Achse des Koordinatensystems der numerischen Steuerung 15. Die das Oberwerkzeug 11 aufnehmende Hubantriebsvorrichtung 13 wird mittels eines motorischen Antriebs 17 längs der Positionierachse 16 verfahren.

Die Bewegung des Stößels 12 entlang der Hubachse 14 und die Positionierung der Hubantriebsvorrichtung 13 entlang der Positionierachse 16 erfolgen mittels eines motorischen Antriebes 17 in Form einer Antriebsanordnung 17, insbesondere Spindelantriebsanordnung, mit einer in Richtung der Positionierachse 16 verlaufenden und mit dem Maschinenrahmen 2 fest verbundenen Antriebsspindel 18. Geführt wird die Hubantriebsvorrichtung 13 bei Bewegungen längs der Positionierachse 16 an drei Führungsschienen 19 des oberen Rahmenschenkels 3, von denen in Figur 1 zwei Führungsschienen 19 zu erkennen sind. Die eine übrige Führungsschiene 19 verläuft parallel zur sichtbaren Führungsschiene 19 und ist von dieser in Richtung X-Achse des Koordinatensystems der numerischen Steuerung 15 beabstandet. Auf den Führungsschienen 19 laufen Führungsschuhe 20 der Hubantriebsvorrichtung 13. Der gegenseitige Eingriff der Führungsschiene 19 und der Führungsschuhe 20 ist dergestalt, dass diese Verbindung zwischen den Führungsschienen 19 und den Führungsschuhen 20 auch eine in vertikaler Richtung wirkende Last aufnehmen kann. Dementsprechend ist die Hubantriebsvorrichtung 13 über die Führungsschuhe 20 und die Führungsschienen 19 am Maschinenrahmen 2 aufgehängt. Ein weiterer Bestandteil der Hubantriebsvorrichtung 13 ist ein Keilgetriebe 21, durch welches eine Lage des Oberwerkzeuges 11 relativ zum Unterwerkzeug 9 einstellbar ist.

Das Unterwerkzeug 9 ist entlang einer unteren Positionierachse 25 verfahrbar aufgenommen. Diese untere Positionierachse 25 verläuft in Richtung der Y-Achse des Koordinatensystems der numerischen Steuerung 15. Vorzugsweise ist die untere Positionierachse 25 parallel zur oberen Positionierachse 16 ausgerichtet. Das Unterwerkzeug 9 kann unmittelbar an der unteren Positionierachse 16 mit einer motorischen Antriebsanordnung 26 entlang der Positionierachse 25 verfahren werden. Alternativ oder ergänzend kann das Unterwerkzeug 9 auch an einer Hubantriebsvorrichtung 27 vorgesehen sein, welche entlang der unteren Positionierachse 25 mittels der motorischen Antriebsanordnung 26 verfahrbar ist. Diese Antriebsanordnung 26 ist bevorzugt als Spindelantriebsanordnung ausgebildet. Die untere Hubantriebsvorrichtung 27 kann im Aufbau der oberen Hubantriebsvorrichtung 13 entsprechen. Ebenfalls kann die motorische Antriebsanordnung 26 der motorischen Antriebsanordnung 17 entsprechen.

Die untere Hubantriebsvorrichtung 27 ist an dem unteren horizontalen Rahmenschenkel 4 zugeordneten Führungsschienen 19 verschiebbar gelagert. Auf den Führungsschienen 19 laufen Führungsschuhe 20 der Hubantriebsvorrichtung 27, so dass die Verbindung zwischen den Führungsschienen 19 und Führungsschuhen 20 am Unterwerkzeug 9 auch eine in vertikaler Richtung wirkende Last aufnehmen kann. Dementsprechend ist auch die Hubantriebsvorrichtung 27 über die Führungsschuhe 20 und die Führungsschienen 19 am Maschinenrahmen 2 und beabstandet zu den Führungsschienen 19 und Führungsschuhen 20 der oberen Hubantriebsvorrichtung 13 aufgehängt. Auch die Hubantriebsvorrichtung 27 kann ein Keilgetriebe 21 umfassen, durch welches die Lage beziehungsweise Höhe des Unterwerkzeuges 9 entlang der Z-Achse einstellbar ist.

Durch die numerische Steuerung 15 können sowohl die motorischen Antriebe 17 für eine Verfahrbewegung des Oberwerkzeuges 11 entlang der oberen Positionierachse 16, als auch der oder die motorischen Antriebe 26 für eine Verfahrbewegung des Unterwerkzeuges 9 entlang der unteren Positionierachse 25 unabhängig voneinander angesteuert werden. Somit ist das Ober- und Unterwerkzeug 11, 9 synchron in Richtung der Y-Achse des Koordinatensystems verfahrbar. Ebenso kann eine unabhängige Verfahrbewegung des Ober- und Unterwerkzeuges 11, 9 auch in verschiedene Richtungen angesteuert werden. Diese unabhängige Verfahrbewegung des Ober- und Unterwerkzeuges 11, 9 kann zeitgleich angesteuert werden. Durch die Entkopplung der Verfahrbewegung zwischen dem Oberwerkzeug 11 und dem Unterwerkzeug 9 kann eine erhöhte Flexibilität in der Bearbeitung von Werkstücken 10 erzielt werden. Auch kann das Ober- und Unterwerkzeug 11, 9 zur Bearbeitung der Werkstücke 10 in vielfältiger Weise ausgebildet sein.

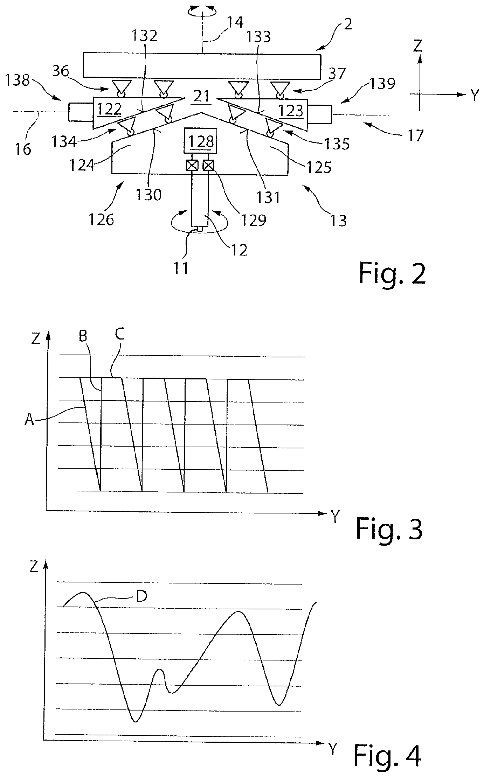

Ein Bestandteil der Hubantriebsvorrichtung 13 ist das Keilgetriebe 21, welches in Figur 2 dargestellt ist. Das Keilgetriebe 21 umfasst zwei antriebsseitige Keilgetriebeelemente 122, 123, sowie zwei abtriebsseitige Keilgetriebeelemente 124, 125. Letztere sind konstruktiv zu einer Baueinheit in Form eines abtriebsseitigen Doppelkeils 126 zusammengefasst. An dem abtriebsseitigen Doppelkeil 126 ist der Stößel 12 um die Hubachse 14 drehbar gelagert. Eine motorische Drehantriebsvorrichtung 128 ist in dem abtriebsseitigen Doppelkeil 126 untergebracht und verfährt den Stößel 12 bei Bedarf entlang der Hubachse 14. Dabei ist sowohl eine Links- als auch eine Rechtsdrehung des Stößels 12 gemäß dem Doppelpfeil in Figur 2 möglich. Eine Stößellagerung 129 ist schematisch dargestellt. Zum einen erlaubt die Stößellagerung 129 reibungsarme Drehbewegungen des Stößels 12 um die Hubachse 14, zum anderen lagert die Stößellagerung 129 den Stößel 12 in axialer Richtung und trägt dementsprechend Lasten, die auf den Stößel 12 in Richtung der Hubachse 14 wirken, in den abtriebsseitigen Doppelkeil 126 ab.

Der abtriebsseitige Doppelkeil 126 wird durch eine Keilfläche 130, sowie durch eine Keilfläche 131 des abtriebsseitigen Getriebeelementes 125 begrenzt. Den Keilflächen 130, 131 der abtriebsseitigen Keilgetriebeelemente 124, 125 liegen Keilflächen 132, 133 der antriebsseitigen Keilgetriebeelemente 122, 123 gegenüber. Durch Längsführungen 134, 135 sind das antriebsseitige Keilgetriebeelement 122 und das abtriebsseitige Keilgetriebeelement 124, sowie das antriebsseitige Keilgetriebeelement 123 und das abtriebsseitige Keilgetriebeelement 125 in Richtung der Y-Achse, das heißt in Richtung der Positionierachse 16 der Hubantriebsvorrichtung 13, relativ zueinander bewegbar geführt.

Das antriebsseitige Keilgetriebeelement 122 verfügt über eine motorische Antriebseinheit 138, das antriebsseitige Keilgetriebeelement 123 über eine motorische Antriebseinheit 139. Beide Antriebseinheiten 138, 139 gemeinsam bilden die Spindelantriebsanordnung 17.

Den motorischen Antriebseinheiten 138, 139 gemeinsam ist die in Figur 1 gezeigte Antriebsspindel 18 sowie die an dem Maschinenrahmen 2 gelagerte und folglich tragstrukturseitige Hubantriebsvorrichtung 13, 27.

Zu den motorischen Antriebseinheiten 138, 139 werden die antriebsseitigen Keilgetriebeelemente 122, 123 derart betrieben, dass diese sich entlang der Positionierachse 16 beispielsweise aufeinander zu bewegen, wodurch sich eine Relativbewegung zwischen den antriebsseitigen Keilgetriebeelementen 122, 123 einerseits und den abtriebsseitigen Keilgetriebeelementen 124, 125 anderseits ergibt. Infolge dieser Relativbewegung wird der abtriebsseitige Doppelkeil 126 und der daran gelagerte Stößel 12 entlang der Hubachse 14 nach unten bewegt. Der an dem Stößel 12 beispielsweise als Oberwerkzeug 11 montierte Stanzstempel führt einen Arbeitshub aus und bearbeitet dabei ein auf der Werkstückauflage 28, 29 bzw. der Werkstückabstützung 8 gelagertes Werkstück 10. Durch eine entgegengesetzte Bewegung der Antriebskeilelemente 122, 123 wird der Stößel 12 wiederum entlang der Hubachse 14 angehoben bzw. nach oben bewegt.

Die vorbeschriebene Hubantriebsvorrichtung 13 gemäß Figur 2 ist bevorzugt baugleich als untere Hubantriebsvorrichtung 27 ausgebildet und nimmt das Unterwerkzeug 9 auf.

In Figur 3 ist ein schematisches Diagramm einer möglichen Hubbewegung des Stößels 12 dargestellt. Das Diagramm zeigt einen Hubverlauf entlang der Y-Achse und der Z-Achse. Durch eine überlagerte Ansteuerung einer Verfahrbewegung des Stößels 12 entlang der Hubachse 14 und entlang der Positionierachse 16 kann beispielsweise eine schräg verlaufende Hubbewegung des Hubstößels 12 nach unten auf das Werkstück 10 zu angesteuert werden, wie dies durch die erste Gerade A dargestellt ist. Darauffolgend nach Durchführung des Hubes kann der Stößel 12 beispielsweise senkrecht abgehoben werden, wie dies durch die Gerade B dargestellt ist. Anschließend erfolgt beispielsweise eine ausschließliche Verfahrbewegung entlang der Y-Achse gemäß der Geraden C, um den Stößel 12 für eine neue Arbeitsposition zum Werkstück 10 zu positionieren. Darauffolgend kann sich beispielsweise die zuvor beschriebene Arbeitsabfolge wiederholen. Sofern für einen nachfolgenden Bearbeitungsschritt das Werkstück 10 auf der Werkstückauflagefläche 28, 29 verfahren wird, kann auch eine Verfahrbewegung entlang der Geraden C entfallen.

Die im Diagramm in Figur 3 dargestellte mögliche Hubbewegung des Stößels 12 am Oberwerkzeug 11 ist bevorzugt mit einem stillstehend gehaltenen Unterwerkzeug 9 kombiniert. Dabei ist das Unterwerkzeug 9 derart innerhalb des Maschinenrahmens 2 positioniert, dass am Ende eines Arbeitshubes des Oberwerkzeuges 11 das Ober- und Unterwerkzeug 11, 9 eine definierte Position einnehmen.

Dieser beispielhafte überlagerte Hubverlauf kann sowohl für das Oberwerkzeug 11 als auch das Unterwerkzeug 9 angesteuert werden. In Abhängigkeit der zu erfolgenden Bearbeitung des Werkstückes 10 kann eine überlagerte Hubbewegung des Oberwerkzeuges und/oder Unterwerkzeuges 11, 9 angesteuert werden.

In Figur 4 ist ein schematisches Diagramm dargestellt, welches eine Hubbewegung des Stößels 12 gemäß der beispielhaft dargestellten Linie D entlang einer Y-Achse und einer Z-Achse darstellt. Abweichend zu Figur 3 ist bei diesem Ausführungsbeispiel vorgesehen, dass eine Hubbewegung des Stößels 12 einen Kurvenverlauf oder Bogenverlauf durchlaufen kann, indem eine Überlagerung der Verfahrbewegungen in Y-Richtung und Z-Richtung entsprechend durch die Steuerung 15 angesteuert wird. Durch eine solche flexible Überlagerung der Verfahrbewegungen in X- und Z-Richtung lassen sich spezifische Bearbeitungsaufgaben lösen. Die Ansteuerung eines solchen Kurvenverlaufes kann für das Oberwerkzeug 11 und/oder Unterwerkzeug 9 vorgesehen sein.

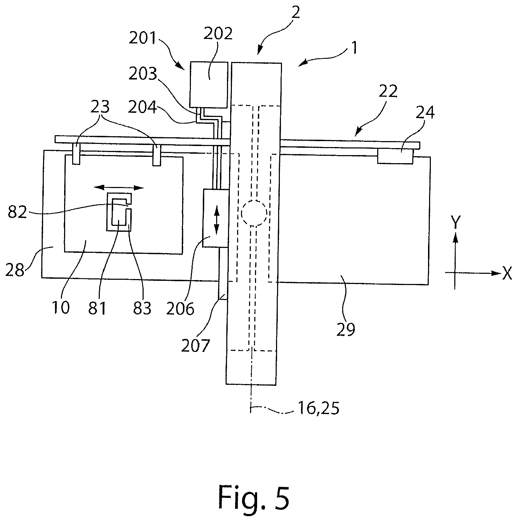

In Figur 5 ist eine schematische Ansicht auf die Werkzeugmaschine 1 gemäß Figur 1 dargestellt. An dem Maschinenrahmen 2 der Werkzeugmaschine 1 erstreckt sich seitlich jeweils eine Werkstückauflage 28, 29. Die Werkstückauflage 28 kann beispielsweise einer nicht näher dargestellten Beladestation zugeordnet sein, durch welche unbearbeitete Werkstücke 10 auf die Werkstückauflage 28 aufgelegt werden. An die Werkstückauflage 28, 29 angrenzend ist eine Vorschubeinrichtung 22 vorgesehen, welche mehrere Greifer 23 umfasst, um das auf die Werkstückauflage 28 aufgelegte Werkstück 10 zu greifen. Mittels der Vorschubeinrichtung 22 wird das Werkstück 10 in X-Richtung durch den Maschinenrahmen 2 hindurchgeführt. Vorzugsweise kann die Vorschubeinrichtung 22 auch in Y-Richtung verfahrbar angesteuert werden. Dadurch kann eine freie Verfahrbewegung des Werkstücks 10 in der X-Y Ebene vorgesehen sein. In Abhängigkeit der Arbeitsaufgabe kann das Werkstück 10 durch die Vorschubeinrichtung 22 sowohl in X-Richtung als auch entgegen der X-Richtung bewegbar sein. Diese Verfahrbewegung des Werkstücks 10 kann auf eine Verfahrbewegung des Oberwerkzeuges 11 und Unterwerkzeuges 9 in und entgegen der Y-Richtung für die jeweilige Bearbeitungsaufgabe angepasst sein.

Der Werkstückauflage 28 gegenüberliegend ist die weitere Werkstückauflage 29 am Maschinenrahmen 2 vorgesehen. Diese kann beispielsweise einer Entladestation zugeordnet sein. Alternativ kann die Be- und Entladung des unbearbeiteten Werkstücks 10 und bearbeiteten Werkstücks 10 mit Werkstücken 81 auch derselben Werkstückauflage 28, 29 zugeordnet sein.

Die Werkzeugmaschine 1 kann des Weiteren eine Laserbearbeitungsvorrichtung 201, insbesondere eine Laserschneidmaschine, aufweisen, welche nur schematisch in einer Draufsicht in Figur 5 dargestellt ist. Diese Laserbearbeitungsvorrichtung 201 kann beispielsweise als eine CO₂-Laserschneidmaschine ausgebildet sein. Die Laserbearbeitungsvorrichtung 201 umfasst eine Laserquelle 202, welche einen Laserstrahl 203 erzeugt, der mittels einer schematisch dargestellten Strahlführung 204 zu einem Laserbearbeitungskopf, insbesondere Laserschneidkopf 206, geführt und in diesem fokussiert wird. Danach wird der Laserstrahl 204 durch eine Schneiddüse senkrecht zur Oberfläche des Werkstückes 10 ausgerichtet, um das Werkstück 10 zu bearbeiten. Der Laserstrahl 203 wirkt am Bearbeitungsort, insbesondere Schneidort, vorzugsweise gemeinsam mit einem Prozessgasstrahl auf das Werkstück 10 ein. Die Schneidstelle, an welcher der Laserstrahl 203 auf das Werkstück 10 auftrifft, ist benachbart zur Bearbeitungsstelle des Oberwerkzeuges 11 und Unterwerkzeuges 9.

Der Laserschneidkopf 206 ist durch einen Linearantrieb 207 mit einem Linearachsensystem zumindest in Y-Richtung, vorzugsweise in Y- und Z-Richtung, verfahrbar. Dieses Linearachsensystem, welches den Laserschneidkopf 206 aufnimmt, kann dem Maschinenrahmen 2 zugeordnet, daran befestigt oder darin integriert sein. Unterhalb eines Arbeitsraumes des Laserschneidkopfes 206 kann eine Strahldurchtrittsöffnung in der Werkstückauflage 28 vorgesehen sein. Vorzugsweise kann unterhalb der Strahldurchtrittsöffnung eine Strahlauffangvorrichtung für den Laserstrahl 21 vorgesehen sein. Die Strahldurchtrittsöffnung und gegebenenfalls die Strahlauffangvorrichtung können auch als eine Baueinheit ausgebildet sein.

Die Laserbearbeitungsvorrichtung 201 kann alternativ auch einen Festkörperlaser als Laserquelle 202 aufweisen, dessen Strahlung mit Hilfe eines Lichtleitkabels zum Laserschneidkopf 206 geführt wird.

Die Werkstückauflage 28, 29 kann sich bis unmittelbar an die Werkstückabstützung 8 erstrecken, welche das Unterwerkzeug 9 zumindest teilweise umgibt. Innerhalb eines sich dazwischen ergebenden Freiraumes ist das Unterwerkzeug 9 entlang der unteren Positionierachse 25 in und entgegen der Y-Richtung verfahrbar.

Auf der Werkstückauflage 28 liegt beispielsweise ein bearbeitetes Werkstück 10 auf, bei welchem ein Werkstückteil 81 von einem Schneidspalt 83 beispielsweise durch eine Stanzbearbeitung oder durch eine Laserstrahlbearbeitung bis auf eine Restverbindung 82 freigeschnitten ist. Durch diese Restverbindung wird das Werkstück 81 in dem Werkstück 10 bzw. dem verbleibenden Restgitter gehalten. Zum Abtrennen des Werkstückteils 81 vom Werkstück 10 wird das Werkstück 10 mittels der Vorschubeinrichtung 22 zum Ober- und Unterwerkzeug 11, 9 für einen Abstanz- und Ausschleusschritt positioniert. Dabei wird die Restverbindung 82 durch einen Stanzhub des Oberwerkzeuges 11 zum Unterwerkzeug 9 getrennt. Das Werkstückteil 81 kann beispielsweise durch teilweises Absenken der Werkstückabstützung 8 nach unten ausgeschleust werden. Alternativ kann bei größeren Werkstückteilen 81 das freigeschnittene Werkstückteil 81 wieder zurück auf die Werkstückauflage 28 oder auf die Werkstückauflage 29 übergeführt werden, um das Werkstückteil 81 und das Restgitter zu entladen. Auch können kleine Werkstückteile 81 gegebenenfalls durch eine Öffnung im Unterwerkzeug 9 ausgeschleust werden.

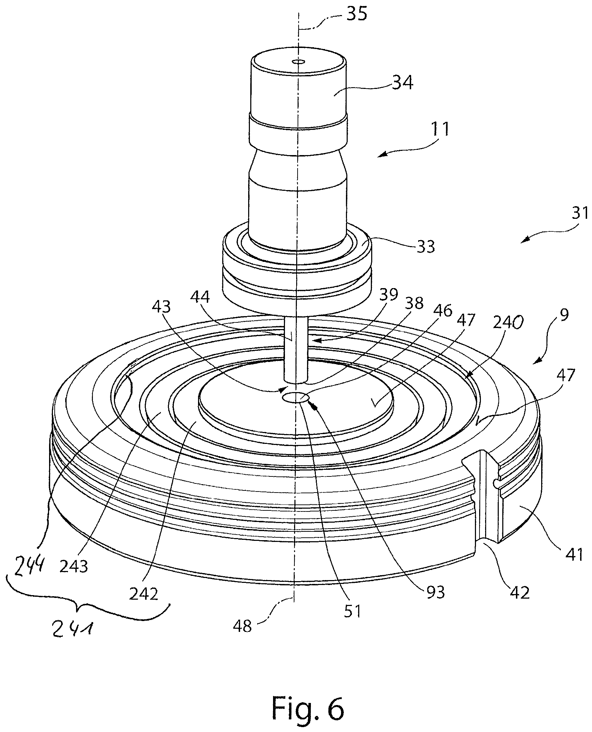

In Figur 6 ist eine erste Ausführungsform des Werkzeuges 31 perspektivisch dargestellt. Dieses Werkzeug 31 umfasst das Oberwerkzeug 11 und Unterwerkzeug 9. Das Oberwerkzeug 11 besteht aus einem schematisch dargestellten Einspannschaft 34 und einem Grundkörper 33, welche in einer gemeinsamen Positionsachse 35 liegen. Diese Positionsachse 35 kann auch eine Werkzeugdrehachse bilden. Der Einspannschaft 34 und der Grundkörper 33 können ein- oder mehrteilig ausgebildet sein. An dem Grundkörper 33 kann ein nicht näher dargestelltes Indexierelement vorgesehen sein. Des Weiteren ist am Grundkörper 33 dem Einspannschaft 34 gegenüberliegend ein Werkzeugkörper 39 vorgesehen, welcher beispielhaft als Stanzstempel ausgebildet ist. Dieser Werkzeugkörper 39 weist eine Schneidkante 38 auf, die eine Stempelstirnfläche 43 umgibt. Der Werkzeugkörper 39 umfasst des Weiteren eine Mantelfläche 44, welche durch die Schneidkante 38 begrenzt ist. Der Werkzeugkörper 39 liegt bevorzugt in der Positionsachse 35, kann aber auch parallel versetzt dazu am Grundkörper 33 vorgesehen sein, oder gegenüber der Positionsachse 35 auch geneigt ausgebildet sein.

Das Unterwerkzeug 9 umfasst einen Grundkörper 41, an dessen Außenseite ein Indexierelement 42 zur Ausrichtung des Unterwerkzeugs 9 vorgesehen sein kann. An einer Oberseite des Unterwerkzeugs 9 ist eine Auflagefläche 47 vorgesehen. Innerhalb dieser Auflagefläche 47 ist eine Öffnung 46 eingebracht, an der ein Gegenwerkzeugkörper 93 vorgesehen ist. Im Ausführungsbeispiel ist der Gegenwerkzeugkörper 93 durch eine kreisrunde Gegenschneidkante 51 gebildet, die an die Geometrie der Schneidkante 38 des Werkzeugkörpers 39 angepasst ist.

Die Auflagefläche 47 am Grundkörper 41 des Unterwerkzeuges 9 ist durch eine Vertiefung 240 unterbrochen. In dieser Vertiefung 240 ist ein Schleifwerkzeug 241 vorgesehen. Dieses Schleifwerkzeug 241 umfasst zumindest einen Schleifkörper 242, 243, 244. Das Schleifwerkzeug 241 kann als Schleifeinsatz ausgebildet sein, das auch auswechselbar an dem Unterwerkzeug 9 vorgesehen ist. Der Schleifkörper 242, 243, 244 ist beispielsweise als Schleifring ausgebildet, so dass eine vollständig umlaufende Arbeitsoberfläche oder Schleiffläche gegeben ist. Die Breite des zumindest einen Schleifkörpers 242, 243, 244 entspricht dem Durchmesser oder einer Breite beziehungsweise Länge der zu bearbeitenden Stempelstirnfläche 43 des Werkzeugkörpers 39 oder ist geringfügig größer ausgebildet. Im Ausführungsbeispiel sind drei Schleifkörper 242, 243, 244 vorgesehen. Die Arbeitsoberfläche des ersten und zweiten Schleifrings 242, 243 sind bevorzugt parallel zur Auflagefläche 47 ausgerichtet. Diese können auch an die Neigung einer Stempelstirnfläche 43 angepasst sein. Die Arbeitsoberfläche des dritten Schleifrings 244 ist senkrecht zur Auflagefläche 47 ausgerichtet. Die Arbeitsoberfläche des dritten Schleifrings 244 kann auch mit einer Neigung zur Auflagefläche 47 oder auch analog zum ersten oder zweiten Schleifring 242, 243 ausgerichtet sein. Der erste als Schleifring ausgebildete Schleifkörper 242 kann eine grobe Körnung für eine Schruppbearbeitung aufweisen, der zweite als Schleifring ausgebildete Schleifkörper 243 kann eine kleinere Körnung für eine Schlichtbearbeitung aufweisen. Der dritte als Schleifring ausgebildete Schleifkörper 244 kann eine weitere Körnung für eine weitere Schleifbearbeitung aufweisen. Alternativ kann der dritte Schleifkörper 244 eine radial umlaufende, insbesondere senkrecht zur Auflagefläche 47 ausgerichtete Arbeitsoberfläche aufweisen, um die Mantelfläche 44 des Werkzeugkörpers 39 zu bearbeiten. Des Weiteren kann der dritte Schleifkörper 244 eine radial und horizontal ausgerichtete Arbeitsoberfläche umfassen, um beispielsweise gleichzeitig die Mantelfläche 44 des Werkzeugkörpers 39 und die Stempelstirnfläche 43 des Werkzeugkörpers 39 zu bearbeiten. Auch kann nur der dritte Schleifkörper 244 das Schleifwerkzeug 241 bilden. Als Schleifmaterial für die Schleifkörper 244 kann beispielsweise Korund vorgesehen sein.

Das Werkzeug 31 ist gemäß Figur 6 in einer Bearbeitungsposition dargestellt, um beispielsweise kreisrunde Durchbrechungen in ein nicht näher dargestelltes Werkstück durch eine Stanzbearbeitung einzubringen.

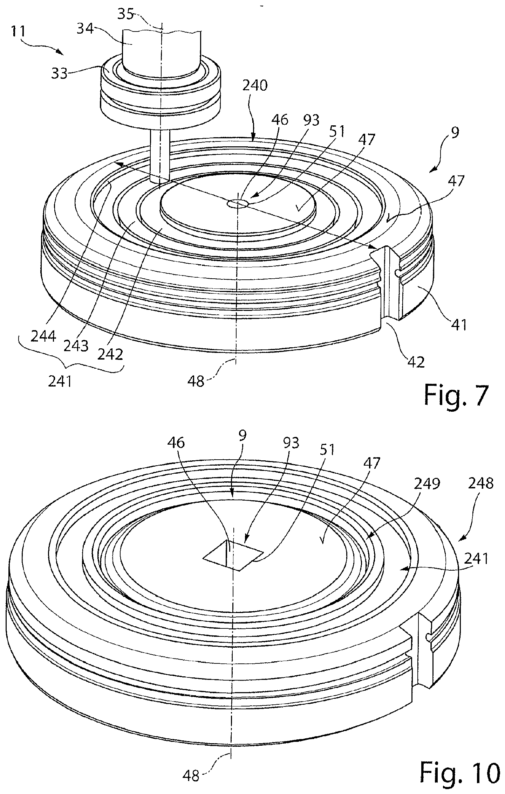

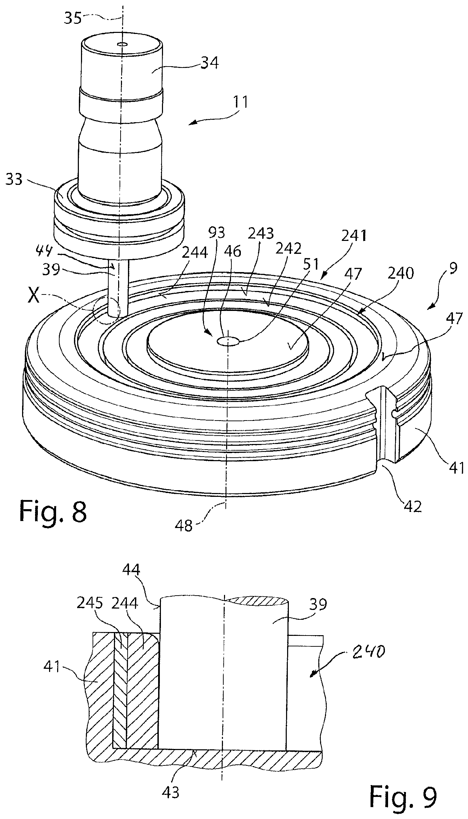

In Figur 7 ist eine perspektivische Ansicht des Werkzeugs 31 gemäß Figur 6 in einer Position für eine Schleifbearbeitung des Werkzeugkörpers 39 dargestellt. Zum Nachschleifen des Werkzeuges 31 wird das Unterwerkzeug 9 und/oder das Oberwerkzeug 11 entlang der Y-Achse verfahren. Es wird eine Verfahrbewegung des Unterwerkzeugs 9 entlang der unteren Positionierachse 25 oder des Oberwerkzeugs 11 entlang der oberen Positionierachse 16 oder eine Relativbewegung von Ober- und Unterwerkzeug 11, 9 entlang der beiden Positionierachsen 16, 25 angesteuert. Die Verfahrbewegung wird so lange eingestellt, sobald der Werkzeugkörper 39 zum Schleifwerkzeug 241 in gewünschter Weise ausgerichtet ist. Beispielsweise ist das Unterwerkzeug 9 zum Schleifkörper 242 für die Schruppbearbeitung ausgerichtet. Darauffolgend werden das Oberwerkzeug 11 und/oder Unterwerkzeug 9 aufeinander zubewegt, um die Stempelstirnfläche 43 des Werkzeugkörpers 39 zur Anlage auf dem Schleifkörper 241 in die Schleifbearbeitungsposition überzuführen. Darauffolgend oder bereits vor dem Überführen in die Schleifbearbeitungsposition kann das Oberwerkzeug und/oder Unterwerkzeug 11, 9 rotierend angetrieben werden. Vorzugsweise erfolgt eine gegenläufige Rotation. Über die Öffnung 46 oder eine andere nicht dargestellte Öffnung beispielsweise unterhalb der Schleifkörper 241, 242, 243 kann eine Luftabsaugung angesteuert werden, so dass während der Schleifbearbeitung entstehender Schleifstaub über diese Öffnung 46 oder eine andere Öffnung nach unten abgesaugt wird. Des Weiteren kann zusätzlich durch eine separate und nicht näher dargestellte Einrichtung eine Emulsion dem zumindest einen Schleifkörper 242, 243, 244 zugeführt werden. Nach dieser Schleifbearbeitung werden das Oberwerkzeug 11 und Unterwerkzeug 9 voneinander abgehoben und in die in Figur 8 dargestellte Schleifbearbeitungsposition verfahren, in der beispielsweise eine Schlichtbearbeitung durchgeführt wird. Dabei können sich sowohl Ober- als auch Unterwerkzeug 11, 9 in bzw. entgegen der Hubrichtung 14 bewegen, als auch nur das Ober- bzw. nur das Unterwerkzeug 11, 9.

Die Figur 8 zeigt beispielhaft eine weitere mögliche Schleifbearbeitungsposition, welche der Werkzeugkörper 39 des Oberwerkzeuges 11 zum Unterwerkzeug 9 einnehmen kann. In dieser Schleifbearbeitungsposition ist die Mantelfläche 44 des Werkzeugkörpers 39 an die Arbeitsoberfläche des radial ausgerichteten Schleifkörpers 244 herangeführt. Durch eine Rotationsbewegung des Oberwerkzeugs 11 und Unterwerkzeugs 9 um die Positionsachse 35, 48 erfolgt eine Schleifbearbeitung der Mantelfläche 44 des Werkzeugkörpers 39.

Bei dieser Schleifbearbeitung der Mantelfläche 44 des Werkzeugkörpers 39 kann die Stempelstirnfläche 43 gegenüber einer horizontal ausgerichteten Ringfläche, die dem radialen Schleifkörper 244 zugeordnet ist, abgehoben sein. Alternativ kann diese der radialen Arbeitsoberfläche des Schleifkörpers 244 zugeordnet und parallel zur Auflagefläche 47 ausgerichtete Ringfläche auch ein Schleifkörper mit einer Arbeitsoberfläche sein. In diesem Fall kann sowohl die Mantelfläche 44 als auch die Stempelstirnfläche 43 des Werkzeugkörpers 39 bearbeitet und geschliffen werden.

In Figur 9 ist eine schematische Schnittdarstellung des Details X in Figur 8 vergrößert dargestellt. Beispielsweise kann der Schleifkörper 244 unter Zwischenschaltung eines elastischen Körpers 245 an dem Grundkörper 41 des Unterwerkzeugs 9 befestigt sein. Dieser elastische Körper 245 ist ringförmig ausgebildet und weist eine Höhe auf, die an die Vertiefung 240 angepasst ist oder geringer ist oder der Breite des Schleifkörpers 244 entspricht. Der elastische Körper 245 kann aus einem schwammartigen oder weichen porenförmigen Material oder aus gummielastischem Material oder Elastomer oder dergleichen ausgebildet sein. Dieser elastische Körper 245 weist den Vorteil auf, dass der Schleifkörper 244 nicht starr an dem Grundkörper 41 befestigt ist, sondern einen zumindest geringfügigen Winkelausgleich ermöglicht. Ein solcher elastischer Körper 245 kann auch bei den weiteren Schleifkörpern 242, 243 vorgesehen sein.

Der beispielsweise als Stanzstempel ausgebildete Werkzeugkörper 39 weist üblicherweise einen Freiwinkel von 1° auf, das heißt, dass die Mantelfläche 44 einen Winkel zur Stempelstirnfläche 43 von beispielsweise 89° einnehmen kann. Sofern nun die Mantelfläche 44 des Werkzeugkörpers 39 durch den radial ausgerichteten Schleifkörper 244 nachzuschleifen ist, wird der Werkzeugkörper 39 durch eine Verfahrbewegung entlang der Positionierachse 16 auf den Schleifkörper 244 zubewegt. Durch den elastischen Körper 245 kann ein Toleranzausgleich geschaffen werden, so dass sich die Schleiffläche beziehungsweise Arbeitsoberfläche des Schleifkörpers 244 parallel zur zu schleifenden Fläche, in diesem Fall der Mantelfläche 44, ausrichtet.

Die gleiche Wirkung kann auch dann erzielt werden, wenn beispielsweise die Stempelstirnfläche 43 des Werkzeugkörpers 39 nachzuschleifen ist und diese Stempelstirnfläche 43 auf dem Schleifkörper 242 oder 243 aufgesetzt wird, der mit dem elastischen Körper 245 am Grundkörper 41 befestigt ist. In diesem Fall ist der elastische Körper 245 parallel zur Arbeitsoberfläche des Schleifkörpers 242 oder 243 angeordnet. Da die Ausrichtung der Positionsachse 35 des Oberwerkzeugs 11 zur Positionsachse 48 des Unterwerkzeugs 9 toleranzbehaftet ist, kann der elastische Körper 245 einen Ausgleich schaffen, so dass die Arbeitsoberfläche des Schleifkörpers 242, 243 parallel zur nachzuschleifenden Fläche ausgerichtet ist.

In Figur 10 ist eine alternative Ausgestaltung des Unterwerkzeuges 9 zu Figur 6 dargestellt. Diese Ausführungsform sieht vor, dass dem Unterwerkzeug 9 mit einer Auflagefläche 47 und einer darin angeordneten Öffnung 46 ein Adapterring 248 zugeordnet ist. An dem Adapterring 248 ist das Schleifwerkzeug 241 vorgesehen. Der Umfang des Unterwerkzeugs 9 ist gegenüber der Ausführungsform in Figur 6 reduziert und wird durch den Adapterring 248 gemäß einer Ausführungsform in Figur 10 komplettiert. Diese Ausführungsform weist den Vorteil auf, dass bei einem Erreichen der Verschleißgrenze des Unterwerkzeugs 9 ein einfaches und schnelles Auswechseln des Unterwerkzeugs 9 ermöglicht ist, wohingegen der Adapterring 248 mitsamt Schleifwerkzeug 241, welche in der Herstellung kostenintensiver als das Unterwerkzeug 9 sind, weiter verwendet werden können. An dem Adapterring 248 können ein oder mehrere Schleifkörper 242, 243, 244 vorgesehen sein, wie dies im Unterwerkzeug 9 in Figur 8 beschrieben ist.

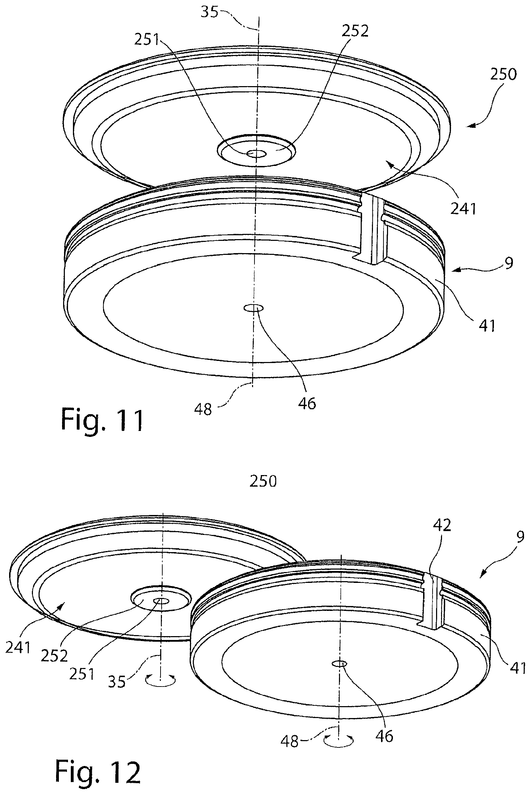

In Figur 11 ist perspektivisch eine weitere Ausführungsform des Werkzeugs 31 gemäß Figur 6 dargestellt, wobei das Oberwerkzeug 11 ausgeblendet ist. Bei dieser Ausführungsform ist an einem dem Oberwerkzeug 11 zugeordneten Abstreifer 250 ein Schleifwerkzeug 241 vorgesehen. Das Schleifwerkzeug 241 ist an einer Unterseite des Abstreifers 250 angeordnet. Dadurch ist ein Schleifring gebildet. In dem Abstreifer 250 ist eine Öffnung 251 vorgesehen, durch welche der Werkzeugkörper 39 des Oberwerkzeugs 11 hindurchgeführt wird. Dieser Öffnung 251 ist ein Abstandselement 252 zugeordnet, welches ring- oder scheibenförmig ausgebildet ist und gegenüber dem Schleifwerkzeug 241 in Richtung auf das Unterwerkzeug 9 hervorsteht. Dieses Abstandselement 252 stellt einen Kratzschutz für die Oberfläche des Werkstückes 10 dar, so dass beim Niederhalten des Werkstückes 10 während einer Stanzbearbeitung und des nachfolgenden Abheben des Oberwerkzeugs 11 das Schleifwerkzeug 241 nicht an der Oberfläche des Werkstücks 10 anliegt.

Ausgehend von der in Figur 11 dargestellten Bearbeitungsposition des Abstreifers 250 zum Unterwerkzeug 9 erfolgt zur Einnahme einer Schleifposition eine Verfahrbewegung des Oberwerkzeuges und/oder Unterwerkzeuges 9, 11 entlang der oberen und/oder unteren Positionierachse 16, 25 in Analogie wie in Figur 7 und 8. Die Verfahrbewegung für einen parallelen Versatz der Positionsachse 35 des Oberwerkzeuges 11 und der Positionsachse 48 des Unterwerkzeugs 9 wird so lange angesteuert, bis das Abstandselement 252 außerhalb des Grundkörpers 41 des Unterwerkzeugs 9 positioniert wird. Dies ist in Figur 12 dargestellt. Anschließend werden der Abstreifer 250 und das Unterwerkzeug 9 relativ aufeinander zugeführt, bis das Schleifwerkzeug 241 an der Auflagefläche 47 beziehungsweise einer Gegenschneidkante 51 des Gegenwerkzeugkörpers 93 anliegt. Vor, mit oder nach der Einnahme der Schleifposition erfolgt ein rotierender Antrieb des Unterwerkzeugs 9 und/oder des Oberwerkzeugs 11, vorzugsweise gegenläufig, um die Schleifbearbeitung durchzuführen.

Alternativ und nicht näher dargestellt kann vorgesehen sein, dass an einer Unterseite des Grundkörpers 33 des Oberwerkzeuges 11 ein Schleifwerkzeug 241 vorgesehen ist. In diesem Fall besteht das Werkzeug 31 nur aus einem Oberwerkzeug 11 und einem Unterwerkzeug 9, ohne den Abstreifer 250. Die Schleifbearbeitung bei dieser Ausführungsform erfolgt analog zur Schleifbearbeitung mittels dem am Abstreifer 250 angeordneten Schleifwerkzeugs 241 zum Nachschleifen einer Gegenschleifkante 51 des Gegenwerkzeugkörpers 93 am Unterwerkzeug 9.

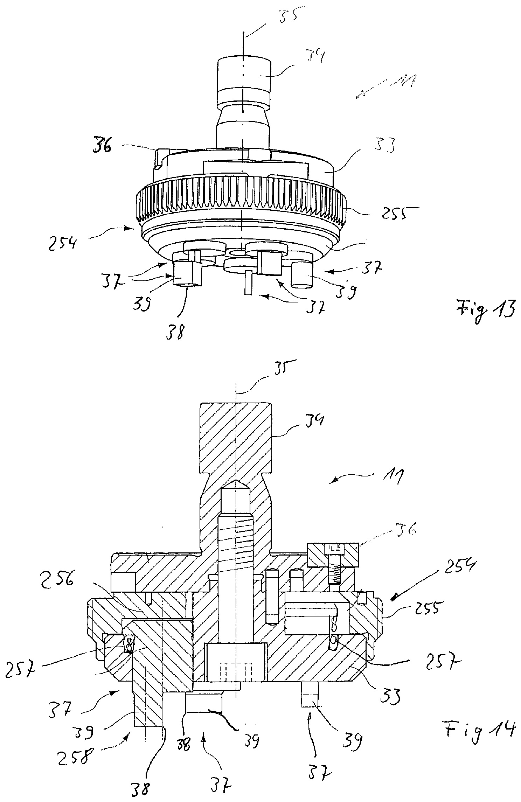

In Figur 13 ist eine perspektivische Ansicht einer alternativen Ausführungsform des Oberwerkzeugs 11 zu dem Oberwerkzeug 11 in Figur 6 dargestellt. In Übereinstimmung mit dem Oberwerkzeug 11 gemäß Figur 6 umfasst das Oberwerkzeug 11 gemäß Figur 13 einen Grundkörper 33 sowie einen Einspannschaft 34, welche eine gemeinsame Positionsachse 35 aufweisen. Der Einspannschaft 34 und der Grundkörper 33 können ein- oder mehrteilig ausgebildet sein. An dem Grundkörper 33 ist des Weiteren ein Indexierkeil 36 zur Ausrichtung des Oberwerkzeugs 11 in einer oberen Werkzeugaufnahme der Werkzeugmaschine 1 vorgesehen.

Abweichend zur Ausführungsform in Figur 6 weist diese Ausführungsform mehrere Bearbeitungswerkzeuge 37 mit jeweils einem Werkzeugkörper 39 auf. Ein solches Oberwerkzeug 11 wird auch als Multitool bezeichnet. Die Werkzeugkörper 39 weisen an einem freien äußeren Ende jeweils eine Schneidkante 38 auf. Jeder der Werkzeugkörper 39 kann eine Geometrie aufweisen, die zu dem oder den weiteren Werkzeugkörpern 39 verschieden ist. An dem Grundkörper 33 ist eine um die Positionsachse 35 drehbar gelagerte Aktivierungsvorrichtung 254 vorgesehen, welche eine Außenverzahnung 255 aufweist. Mittels einem an der oberen Werkzeugaufnahme vorgesehenen und nicht näher dargestellten Antrieb kann die Aktivierungsvorrichtung 254 über die Außenverzahnung 255 in Drehung versetzt werden. Dadurch kann eines der als Einsätze ausgebildeten Bearbeitungswerkzeuge 37 aktiviert und die weiteren Bearbeitungswerkzeuge 37 nicht aktiviert werden. Zur Verdeutlichung der Aktivierung wird nachfolgend auf Figur 14 Bezug genommen, welche das Oberwerkzeug 11 in einer Schnittdarstellung zeigt. Die Aktivierungsvorrichtung 254 weist eine in den Grundkörper 33 auf die Positionsachse 35 zugerichtete Steuerscheibe oder Steuerelement 256 auf, welche sich in radialer Richtung nur partiell erstreckt. Bei einer entsprechenden Positionierung des Steuerelementes 256 oberhalb eines Bearbeitungswerkzeuges 37 wird nur dieses eine ausgewählte Bearbeitungswerkzeug 37 aktiviert und in einer ausgefahrenen Position 258 fixiert, wohingegen die weiteren Bearbeitungswerkzeuge 37 in einer eingefahrenen Position gegenüber dem Grundkörper 33 verbleiben. Die Bearbeitungswerkzeuge 37 werden durch ein Rückhalteelement 257 in einer oberen Position gehalten. Somit wird durch die Steuerscheibe 256 der jeweilige Bearbeitungswerkkörper 37 aus der eingefahrenen inaktiven Position in die aktive beziehungsweise ausgefahrene Position 258 übergeführt.

Durch die Auswahl des jeweiligen Bearbeitungswerkzeuges 37 über die Aktivierungsvorrichtung 255 kann der nachzuschleifende Werkzeugkörper 39 jeweils einzeln ausgewählt und ausgefahren werden, um darauffolgend eine Schleifbearbeitung am Unterwerkzeug zu positionieren. In einer ausgefahrenen Position 258 des Werkzeugkörpers 37 herrschen bei dem Oberwerkzeug 11 gemäß Figur 13 und 14 genau die selben Verhältnisse wie beim Oberwerkzeug 11 gemäß Figur 6, so dass auf die dortige Beschreibung und Ausführungsformen bezüglich des Nachschleifens Bezug genommen wird, welche insbesondere in den Figuren 7 bis 10 beschrieben werden.

## Patentansprüche

1. Werkzeug zum Bearbeiten von plattenförmigen Werkstücken (10), insbesondere von Blechen,
- mit einem Oberwerkzeug (11), welches einen Einspannschaft (34) und einen Grundkörper (33) aufweist, die in einer gemeinsamen Positionsachse (35) liegen, und mit zumindest einem dem Einspannschaft (34) gegenüberliegend am Grundkörper (33) angeordneten Werkzeugkörper (39),
- mit einem Unterwerkzeug (9), welches einen Grundkörper (41) mit einer Auflagefläche (47) für das Werkstück (10) aufweist und mit einem am Grundkörper (41) vorgesehenen Gegenwerkzeugkörper (93), wobei der Grundkörper (41) eine Positionsachse (48) aufweist, welche senkrecht zur Auflagefläche (47) ausgerichtet ist,
- wobei das Oberwerkzeug (11) und Unterwerkzeug (9) zur Bearbeitung eines dazwischen angeordneten Werkstücks (10) in einer Hubrichtung aufeinander zu bewegbar sind,
**dadurch gekennzeichnet, dass**
- an dem Grundkörper (41) des Unterwerkzeugs (9) in Richtung auf das Oberwerkzeug (11) weisend und/oder
- an einem dem Werkzeugkörper (39) des Oberwerkzeugs (11) zugeordneten Abstreifer (250) in Richtung auf das Unterwerkzeug (9) weisend und/oder
- an einem Grundkörper (33) des Oberwerkzeugs (11) in Richtung auf das Unterwerkzeug (9) weisend zumindest ein Schleifwerkzeug (241) vorgesehen ist.

2. Werkzeug nach Anspruch 1, **dadurch gekennzeichnet, dass** das Schleifwerkzeug (241) zumindest einen Schleifkörper (242, 243, 244) aufweist, dessen Arbeitsoberfläche senkrecht, parallel und/oder geneigt zu einer Positionsachse (35, 48) ausgerichtet ist.

3. Werkzeug nach Anspruch 1 oder 2, **dadurch gekennzeichnet, dass** das Schleifwerkzeug (241) als ein Schleifeinsatz in Form einer Schleifscheibe oder eines Schleifringes ausgebildet ist.

4. Werkzeug nach einem der vorhergehenden Ansprüche, **dadurch gekennzeichnet, dass** das Schleifwerkzeug (241) auswechselbar an dem Grundkörper (33, 41) des Oberwerkzeuges und/oder des Unterwerkzeuges (11, 9) und/oder an dem Abstreifer (250) vorgesehen ist.

5. Werkzeug nach einem der vorhergehenden Ansprüche, **dadurch gekennzeichnet, dass** der Arbeitsoberfläche des zumindest einen Schleifkörpers (242, 243, 244) gegenüberliegend ein elastischer Körper (245) vorgesehen ist, der an dem Grundkörper (41) des Unterwerkzeugs (9) und/oder dem Grundkörper (33) des Oberwerkzeugs und/oder dem Abstreifer (250) angeordnet ist, und vorzugsweise der elastische Körper (245) in einer flächigen Erstreckung der Form des Schleifkörpers (242, 243, 244) entspricht.

6. Werkzeug nach einem der vorhergehenden Ansprüche, **dadurch gekennzeichnet, dass** das in dem Grundkörper (41) des Unterwerkzeugs (9) vorgesehene Schleifwerkzeug (241) mit dessen Arbeitsoberfläche des Schleifkörpers (242, 243, 244) gegenüber der Auflagefläche (47) vertieft angeordnet ist.

7. Werkzeug nach einem der vorhergehenden Ansprüche, **dadurch gekennzeichnet, dass** im Grundkörper (41) des Unterwerkzeugs (9) eine Öffnung (46) vorgesehen ist, an der zumindest eine Gegenschneidkante (51) eines Gegenwerkzeugkörpers (93) vorgesehen ist und das zumindest eine Schleifwerkzeug (241) die Öffnung (46) umgibt.

8. Werkzeug nach Anspruch 7, **dadurch gekennzeichnet, dass** im Grundkörper (41) des Unterwerkzeugs (9) ein oder mehrere Schleifkörper (242, 243) mit voneinander abweichenden Körnungen parallel zur Auflagefläche (47) ausgerichtet sind und/oder ein Schleifkörper (244) mit einer radial umlaufenden Arbeitsoberfläche vorgesehen ist, welche an einer Umfangswand einer Vertiefung (240) in der Auflagefläche (47) des Grundkörpers (41) des Unterwerkzeuges (9) vorgesehen ist.

9. Werkzeug nach einem der vorhergehenden Ansprüche, **dadurch gekennzeichnet, dass** an einer Unterseite des Abstreifers (250) eine Öffnung (251) für den Werkzeugkörper (39) des Oberwerkzeuges (11) vorgesehen und ein Abstandselement (252) dieser Öffnung (251) zugeordnet ist, welches gegenüber dem Schleifwerkzeug (241) in Richtung auf das Unterwerkzeug (9) hervorsteht.

10. Werkzeug nach einem der vorhergehenden Ansprüche, **dadurch gekennzeichnet, dass** das an dem Unterwerkzeug (9) vorgesehene Schleifwerkzeug (241) an einem Adapterring (252) vorgesehen ist, der auswechselbar zum Unterwerkzeug (9) anordenbar ist und das Unterwerkzeug (9) umgibt.

11. Werkzeugmaschine zum Bearbeiten von plattenförmigen Werkstücken (10), vorzugsweise von Blechen,
- mit einem Oberwerkzeug (11), welches entlang einer Hubachse (14) mit einer Hubantriebsvorrichtung (13) in Richtung auf ein mit dem Oberwerkzeug (11) zu bearbeitenden Werkstück (10) und in Gegenrichtung bewegbar ist und welches entlang einer senkrecht zur Hubachse (14) verlaufenden oberen Positionierachse (16) positionierbar ist und mit einer Antriebsanordnung (17) entlang der oberen Positionierachse (16) verfahrbar ist,
- mit einem Unterwerkzeug (9), welches zum Oberwerkzeug (11) ausgerichtet und welches entlang einer unteren Hubachse (30) mit einer Hubantriebvorrichtung (27) in Richtung auf das Oberwerkzeug (11) bewegbar ist und entlang einer unteren Positionierachse (25) positionierbar ist, die senkrecht zur Hubachse (14) des Oberwerkzeugs (11) ausgerichtet und mit einer Antriebsanordnung (26) entlang der unteren Positionier-achse (25) verfahrbar ist,
- mit einer Steuerung (15), durch welche die Antriebsanordnungen (17, 26) zum Verfahren des Ober- und Unterwerkzeugs (11, 9) ansteuerbar sind,
**dadurch gekennzeichnet,**
- **dass** ein Werkzeug nach einem der Ansprüche 1 bis 10 zum Bearbeiten von Werkstücken vorgesehen ist und
- **dass** die Verfahrbewegung des Oberwerkzeugs (11) entlang der oberen Positionierachse (16) und die Verfahrbewegung des Unterwerkzeugs (9) entlang der unteren Positionierachse (25) jeweils unabhängig voneinander ansteuerbar sind, und für eine Schleifbearbeitung des Oberwerkzeugs (11) und/oder Unterwerkzeugs (9) die Positionsachsen (35, 48) parallel zueinander versetzt angeordnet sind.

12. Verfahren zum Bearbeiten von plattenförmigen Werkstücken (10), vorzugsweise Blechen,
- bei dem ein Oberwerkzeug (11), welches entlang einer Hubachse (14) mit einer Hubantriebsvorrichtung (13) in Richtung auf ein mit dem Oberwerkzeug (11) zu bearbeitenden Werkstück (10) und in Gegenrichtung bewegbar ist und welches entlang einer senkrecht zur Hubachse (14) verlaufenden oberen Positionierachse (16) positionierbar ist, mit einer Antriebsanordnung (17) entlang der oberen Positionierachse (16) verfahren wird,
- bei dem ein Unterwerkzeug (9), welches zum Oberwerkzeug (11) ausgerichtet und entlang einer unteren Positionierachse (25) positionierbar ist, die senkrecht zur Hubachse (14) des Oberwerkzeugs (11) ausgerichtet ist, mit einer Antriebsanordnung (26) entlang der unteren Positionierachse (25) verfahren wird,
- bei dem mit einer Steuerung (15) die Antriebsanordnungen (17, 26) zum Verfahren des Ober- und Unterwerkzeugs (11, 9) angesteuert werden,
**dadurch gekennzeichnet,**
- **dass** ein Werkzeug (31) nach einem der Ansprüche 1 bis 10 zur Schleifbearbeitung des Oberwerkzeugs (11) und/oder Unterwerkzeugs (9) eingesetzt wird.

13. Verfahren nach Anspruch 12, **dadurch gekennzeichnet, dass** das Oberwerkzeug (11) und/oder Unterwerkzeug (9) mit einer Verfahrbewegung relativ zueinander entlang der oberen und/oder unteren Positionierachsen (16, 25) angesteuert werden und der Werkzeugkörper (39) zum Schleifwerkzeug (242) am Unterwerkzeug (9) oder Gegenwerkzeugkörper (93) zum Schleifwerkzeug (241) am Grundkörper (33) oder am Abstreifer (250) des Oberwerkzeugs (11) ausgerichtet wird.

14. Verfahren nach Anspruch 12 oder 13, **dadurch gekennzeichnet, dass** das Oberwerkzeug (11) und/oder Unterwerkzeug (9) rotierend, vorzugsweise gegenläufig rotierend um deren Positionsachsen (35, 48) während der Schleifbearbeitung des Werkzeugkörpers (39) oder Gegenwerkzeugkörpers (93) angetrieben werden.

15. Verfahren nach einem der Ansprüche 12 bis 14, **dadurch gekennzeichnet, dass** das Oberwerkzeug (11) und/oder Unterwerkzeug (9) aus einer Bearbeitungsposition relativ zueinander entlang den Positionierachsen (16, 25) verfahren werden,
- so dass die Positionsachsen (35, 48) des Oberwerkzeugs (11) und Unterwerkzeugs (9) parallel versetzt zueinander ausgerichtet sind und
- dass bei einem als Stanzstempel ausgebildeten Werkzeugkörpers (39) das Oberwerkzeug (11) und/oder Unterwerkzeug (9) durch eine Hubbewegung aufeinander zubewegt und der Stanzstempel auf einen ersten Schleifkörper (242, 243) des Schleifwerkzeugs (241) aufgesetzt wird und insbesondere eine Verrundung der Stempelstirnfläche (43) des Bearbeitungswerkzeuges (39) bearbeitet wird und
- vorzugsweise die Stempelstirnfläche (43) des Werkzeugkörpers (39) mit zumindest einem weiteren Schleifkörper (242, 243) des Schleifwerkzeugs (241) nachbearbeitet wird.

16. Verfahren nach einem der Ansprüche 12 bis 15, **dadurch gekennzeichnet, dass** der als Stanzstempel ausgebildete Werkzeugkörper (39) einem Schleifkörper (244) des Schleifwerkzeuges (241) mit einer radial ausgerichteten Arbeitsoberfläche zugeführt wird, und eine Mantelfläche (44) des Werkzeugkörpers (39) bearbeitet wird.

17. Verfahren nach einem der Ansprüche 12 bis 14, **dadurch gekennzeichnet, dass** das Oberwerkzeug (11) und/oder Unterwerkzeug (9) aus einer Bearbeitungsposition relativ zueinander entlang der Positionierachsen (16, 25) verfahren werden, so dass die Positionierachsen (16, 25) parallel versetzt zueinander ausgerichtet sind, bis ein Abstandselement (252) des Abstreifers (250) außerhalb des Grundkörpers (49) des Unterwerkzeugs (9) positioniert ist und anschließend eine Hubbewegung des Oberwerkzeugs (11) und/oder des Unterwerkzeugs (9) eingeleitet wird, durch welche das am Abstreifer (250) vorgesehene Schleifwerkezug (241) zur Anlage an einem Gegenwerkzeugkörper (93) des Unterwerkzeugs (9) übergeführt wird.

## Claims

1. Tool for machining plate-shaped workpieces (10), in particular metal sheets,
- with an upper tool (11), which has a clamping shank (34) and a base body (33), which lie in a common position axis (35), and with at least one tool body (39) arranged on the base body (33) opposite the clamping shank (34),
- with a lower tool (9), which has a base body (41) with a support surface (47) for the workpiece (10), and with a counter-tool body (93) provided on the base body (41), the base body (41) having a position axis (48), which is aligned perpendicular to the support surface (47),
- wherein the upper tool (11) and lower tool (9) are movable towards each other in a stroke direction for machining a workpiece (10) arranged therebetween,
**characterized in in that** at least one grinding tool (241) is provided
- on the base body (41) of the lower tool (9) pointing in the direction of the upper tool (11) and/or
- on a scraper (250) associated with the tool body (39) of the upper tool (11) pointing in the direction of the lower tool (9) and/or
- on a base body (33) of the upper tool (11) pointing in the direction of the lower tool (9).

2. Tool according to claim 1, **characterized in that** the grinding tool (241) comprises at least one grinding body (242, 243, 244), the working surface of which is oriented perpendicularly, parallel and/or inclined to a position axis (35, 48).

3. Tool according to claim 1 or 2, **characterized in that** the grinding tool (241) is designed as a grinding insert in the form of a grinding wheel or a grinding ring.

4. Tool according to one of the preceding claims, **characterized in that** the grinding tool (241) is replaceably provided on the base body (33, 41) of the upper tool and/or the lower tool (11, 9) and/or on the scraper (250).

5. Tool according to one of the preceding claims, **characterized in that** an elastic body (245) is provided opposite the working surface of the at least one grinding body (242, 243, 244), which is arranged on the base body (41) of the lower tool (9) and/or the base body (33) of the upper tool and/or the scraper (250), and preferably the elastic body (245) corresponds in a planar extension to the shape of the grinding body (242, 243, 244).

6. Tool according to one of the preceding claims, **characterized in that** the grinding tool (241) provided in the base body (41) of the lower tool (9) is arranged with its working surface of the grinding body (242, 243, 244) recessed relative to the support surface (47).

7. Tool according to one of the preceding claims, **characterized in that** an opening (46) is provided in the base body (41) of the bottom tool (9), at which at least one counter cutting edge (51) of a counter tool body (93) is provided, and the at least one grinding tool (241) surrounds the opening (46).

8. Tool according to claim 7, **characterized in that** in the base body (41) of the lower tool (9) one or more grinding bodies (242, 243) with different grains are aligned parallel to the bearing surface (47) and/or an abrasive body (244) with a radially circumferential working surface is provided, which is provided on a circumferential wall of a recess (240) in the bearing surface (47) of the base body (41) of the lower tool (9).

9. Tool according to one of the preceding claims, **characterized in that** an opening (251) for the tool body (39) of the upper tool (11) is provided on an underside of the scraper (250) and a spacer element (252) is associated with this opening (251), which spacer element projects with respect to the grinding tool (241) in the direction of the lower tool (9).

10. Tool according to one of the preceding claims, **characterized in that** the grinding tool (241) provided on the lower tool (9) is provided on an adapter ring (252) which is arrangable interchangeably to the lower tool (9) and surrounds the lower tool (9).

11. Machine tool for machining plate-shaped workpieces (10), preferably metal sheets,
- with an upper tool (11) which is movable along a stroke axis (14) with a stroke drive device (13) in the direction of a workpiece (10) to be machined with the upper tool (11) and in the opposite direction and which is positionable along an upper positioning axis (16) extending perpendicularly to the stroke axis (14) and is movable along the upper positioning axis (16) with a drive arrangement (17),
- with a lower tool (9) which is aligned with the upper tool (11) and which is movable along a lower stroke axis (30) towards the upper tool (11) by means of a stroke drive device (27) and is positionable along a lower positioning axis (25), which is aligned perpendicularly to the stroke axis (14) of the upper tool (11) and is moveable along the lower positioning axis (25) by a drive arrangement (26),
- with a controller (15) by means of which the drive arrangements (17, 26) for moving the upper and lower tool (11, 9) is controllable,
**characterized in,**
- **that** a tool according to one of claims 1 to 10 is provided for machining workpieces, and
- **that** the traversing movement of the upper tool (11) along the upper positioning axis (16) and the traversing movement of the lower tool (9) along the lower positioning axis (25) is each controlled independently of one another, and for grinding machining of the upper tool (11) and/or lower tool (9) the positioning axes (35, 48) are arranged offset parallel to one another.

12. Method for machining plate-shaped workpieces (10), preferably metal sheets,
- in which an upper tool (11), which is movable along a stroke axis (14) with a stroke drive device (13) in the direction of a workpiece (10) to be machined with the upper tool (11) and in the opposite direction and which is positionable along an upper positioning axis (16) extending perpendicular to the stroke axis (14), is moved along the upper positioning axis (16) with a drive arrangement (17),
- in which a lower tool (9), which is aligned with the upper tool (11) and is positionable along a lower positioning axis (25), which is aligned perpendicularly to the stroke axis (14) of the upper tool (11), is moved along the lower positioning axis (25) by a drive arrangement (26),
- in which the drive arrangements (17, 26) for moving the upper and lower tool (11, 9) are activated by a controller (15),
**characterized in**
- **that** a tool (31) according to one of claims 1 to 10 is used for grinding the upper tool (11) and/or lower tool (9).

13. Method according to claim 12, **characterized in that** the upper tool (11) and/or lower tool (9) are controlled with a traversing movement relative to one another along the upper and/or lower positioning axes (16, 25) and the tool body (39) is aligned with the grinding tool (242) on the lower tool (9) or counter tool body (93) is aligned with the grinding tool (241) on the base body (33) or on the scraper (250) of the upper tool (11).

14. Method according to claim 12 or 13, **characterized in that** the upper tool (11) and/or lower tool (9) are driven rotatingly, preferably counter-rotatingly rotating about their position axes (35, 48) during the grinding operation of the tool body (39) or counter tool body (93).

15. Method according to one of claims 12 to 14, **characterized in that** the upper tool (11) and/or lower tool (9) are moved from a machining position relative to one another along the positioning axes (16, 25),
- so that the positioning axes (35, 48) of the upper tool (11) and lower tool (9) are aligned parallel and offset relative to one another, and
- that in the case of a tool body (39) designed as a punch, the upper tool (11) and/or lower tool (9) is moved towards one another by a lifting movement and the punch is moved onto a first grinding body (242), 243) of the grinding tool (241) and in particular a rounding of the punch end face (43) of the machining tool (39) is machined and
- preferably the punch end face (43) of the tool body (39) is finished with at least one further grinding body (242, 243) of the grinding tool (241).

16. A method according to one of claims 12 to 15, **characterized in that** the tool body (39) designed as a punch is fed to a grinding body (244) of the grinding tool (241) with a radially oriented working surface, and an outer surface (44) of the tool body (39) is machined.

17. Method according to one of claims 12 to 14, **characterized in that** the upper tool (11) and/or lower tool (9) are moved from a machining position relative to one another along the positioning axes (16, 25) so that the positioning axes (16, 25) are aligned parallel and offset relative to one another, until a spacer element (252) of the scraper (250) is positioned outside the base body (49) of the lower tool (9) and then a lifting movement of the upper tool (11) and/or of the lower tool (9) is initiated, by means of which the grinding mechanism train (241) provided on the scraper (250) is transferred to bear against a counter-tool body (93) of the lower tool (9).

## Revendications

1. Outil destiné à usiner des pièces (10) en forme de plaque, en particulier des tôles,
- avec un outil supérieur (11) qui présente une tige de serrage (34) et un corps de base (33) lesquels sont situés dans un axe de positon (35) commun, et avec au moins un corps d'outil (39) disposé sur le corps de base (33), à l'opposé de la tige de serrage (34),
- avec un outil inférieur (9) qui présente un corps de base (41) pourvu d'une surface d'appui (47) destinée à recevoir la pièce à usiner (10) et avec un corps de contre-outil (93) prévu sur le corps de base (41), le corps de base (41) présentant un axe de position (48) qui est orienté de manière perpendiculaire à la surface d'appui (47),
- l'outil supérieur (11) et l'outil inférieur (9) pouvant être déplacés l'un vers l'autre dans un sens de course en vue d'usiner une pièce (10) disposée entre eux,
**caractérisé en ce qu'**au moins un outil abrasif (241) est prévu
- sur le corps de base (41) de l'outil inférieur (9) de manière à être tourné en direction de l'outil supérieur (11) et/ou
- sur un racleur (250) affecté au corps d'outil (39) de l'outil supérieur (11) de manière à être tourné en direction de l'outil inférieur (9) et/ou
- sur un corps de base (33) de l'outil supérieur (11) de manière à être tourné en direction de l'outil inférieur (9).

2. Outil selon la revendication 1, **caractérisé en ce que** l'outil abrasif (241) présente au moins un corps abrasif (242, 243, 244) dont la surface de travail est orientée de manière à être perpendiculaire, parallèle et/ou inclinée par rapport à un axe de position (35, 48).

3. Outil selon la revendication 1 ou 2, **caractérisé en ce que** l'outil abrasif (241) est réalisé en tant qu'insert abrasif sous la forme d'un disque abrasif ou d'un anneau abrasif.

4. Outil selon l'une quelconque des revendications précédentes, **caractérisé en ce que** l'outil abrasif (241) est prévu sur le corps de base (33, 41) de l'outil supérieur et/ou de l'outil inférieur (11, 9) et/ou sur le racleur (250) de manière à pourvoir être échangé.

5. Outil selon l'une quelconque des revendications précédentes, **caractérisé en ce qu'**à l'opposé de la surface de travail dudit au moins un corps abrasif (242, 243, 244) est prévu un corps élastique (245) qui est disposé sur le corps de base (41) de l'outil inférieur (9) et/ou sur le corps de base (33) de l'outil supérieur et/ou sur le racleur (250), et **en ce que** de préférence le corps élastique (245) correspond, dans une extension plane, à la forme du corps abrasif (242, 243, 244).

6. Outil selon l'une quelconque des revendications précédentes, **caractérisé en ce que** l'outil abrasif (241) prévu dans le corps de base (41) de l'outil inférieur (9) présente un corps abrasif (242, 243, 244) dont la surface de travail est surbaissée par rapport à la surface d'appui (47).

7. Outil selon l'une quelconque des revendications précédentes, **caractérisé en ce que** dans le corps de base (41) de l'outil inférieur (9) est prévue une ouverture (46) au niveau de laquelle est prévue au moins une arête de contre-découpe (51) d'un corps de contre-outil (93) et **en ce que** ledit au moins un outil abrasif (241) entoure l'ouverture (46).

8. Outil selon la revendication 7, **caractérisé en ce que** dans le corps de base (41) de l'outil inférieur (9), un ou plusieurs corps abrasifs (242, 243) présentant des grains qui diffèrent les uns des autres sont orientés parallèlement à la surface d'appui (47) et/ou **en ce qu'**il est prévu un corps abrasif (244) avec une surface de travail qui s'étend radialement sur sa circonférence et qui est prévue sur une paroi circonférentielle d'un creux (240) ménagé dans la surface d'appui (47) du corps de base (41) de l'outil inférieur (9).

9. Outil selon l'une quelconque des revendications précédentes, **caractérisé en ce qu'**une ouverture (251) pour le corps d'outil (39) de l'outil supérieur (11) est prévue sur une face inférieure du racleur (250) et qu'à ladite ouverture (251) est affecté un élément d'espacement (252) qui fait saillie par rapport à l'outil abrasif (241) en direction de l'outil inférieur (9).

10. Outil selon l'une quelconque des revendications précédentes, **caractérisé en ce que** l'outil abrasif (241) prévu sur l'outil inférieur (9) est prévu sur un anneau adaptateur (252) qui peut être disposé par rapport à l'outil inférieur (9) de manière à pouvoir être échangé et qui entoure l'outil inférieur (9).

11. Machine-outil destinée à usiner des pièces (10) en forme de plaque, de préférence des tôles,
- pourvue d'un outil supérieur (11) qui peut être déplacé le long d'un axe de levage (14) grâce à un dispositif d'entraînement de levage (13) en direction d'une pièce (10) devant être usinée avec l'outil supérieur (11), voire en direction opposée, et qui peut être positionné le long d'un axe de positionnement supérieur (16) s'étendant perpendiculairement à l'axe de levage (14) et qui peut être déplacé le long dudit axe de positionnement supérieur (16) grâce à un mécanisme d'entraînement (17),
- pourvue d'un outil inférieur (9) qui est orienté par rapport à l'outil supérieur (11) et qui peut être déplacé le long d'un axe de levage inférieur (30) en direction de l'outil supérieur (11) grâce à un dispositif d'entraînement de levage (27) et qui peut être positionné le long d'un axe de positionnement inférieur (25) orienté perpendiculairement à l'axe de levage (14) de l'outil supérieur (11) et qui peut être déplacé le long de l'axe de positionnement inférieur (25) grâce à un mécanisme d'entraînement (26),
- pourvue d'une commande (15) grâce à laquelle les mécanismes d'entraînement (17, 26) destinés à déplacer les outils supérieur et inférieur (11, 9) peuvent être activés, **caractérisée en ce que**
- un outil selon l'une quelconque des revendications 1 à 10 est prévu en vue d'usiner des pièces et
- le mouvement de déplacement de l'outil supérieur (11) le long de l'axe de positionnement supérieur (16) et le mouvement de déplacement de l'outil inférieur (9) le long de l'axe de positionnement inférieur (25) peuvent être respectivement activés indépendamment l'un de l'autre, et que pour une opération d'usinage par abrasion de l'outil supérieur (11) et/ou de l'outil inférieur (9), les axes de position (35, 48) sont disposés de manière à être décalés parallèlement.

12. Procédé destiné à usiner des pièces (10) en forme de plaque, de préférence des tôles,
- lors duquel un outil supérieur (11) qui peut être déplacé le long d'un axe de levage (14) grâce à un dispositif d'entraînement de levage (13) en direction d'une pièce (10) devant être usinée avec l'outil supérieur (11), voire dans la direction opposée, et qui peut être positionné le long d'un axe de positionnement supérieur (16) s'étendant perpendiculairement à l'axe de levage (14) est déplacé le long dudit axe de positionnement supérieur (16) grâce à un mécanisme d'entraînement (17),
- lors duquel un outil inférieur (9) qui est orienté par rapport à l'outil supérieur (11) et qui peut être positionné le long d'un axe de positionnement inférieur (25) qui est orienté perpendiculairement à l'axe de levage (14) de l'outil supérieur (11) est déplacé le long dudit axe de positionnement inférieur (25) grâce à un mécanisme d'entraînement (26),
- lors duquel les mécanismes d'entraînement (17, 26) destinés à déplacer les outils supérieur et inférieur (11, 9) sont activés grâce à une commande (15),
**caractérisé en ce que**
- un outil (31) selon l'une quelconque des revendications 1 à 10 est utilisé en vue d'usiner par abrasion l'outil supérieur (11 et/ou l'outil inférieur (9),

13. Procédé selon la revendication 12, **caractérisé en ce que** l'outil supérieur (11) et/ou l'outil inférieur (9) sont activés en vue d'effectuer un mouvement de déplacement l'un par rapport à l'autre le long des axes de positionnement supérieur et/ou inférieur (16, 25), et **en ce que** le corps d'outil (39) est orienté par rapport à l'outil abrasif (242) prévu sur l'outil inférieur (9) ou que le corps de contre-outil (93) est orienté par rapport à l'outil abrasif (241) prévu sur le corps de base (33) ou sur le racleur (250) de l'outil supérieur (11).

14. Procédé selon la revendication 12 ou 13, **caractérisé en ce que** l'outil supérieur (11) et/ou l'outil inférieur (9) sont activés de manière à tourner, de préférence à tourner en sens contraire, autour de leur axe de position respectif (35, 48) pendant que le corps d'outil (39) ou le corps de contre-outil (93) est soumis à l'opération d'usinage par abrasion.

15. Procédé selon l'une quelconque des revendications 12 à 14, **caractérisé en ce que** l'outil supérieur (11) et/ou l'outil inférieur (9) sont déplacés l'un par rapport à l'autre à partir d'une position d'usinage, et ce le long des axes de positionnement (16, 25)
- de telle sorte que les axes de position (35, 48) de l'outil supérieur (11) et de l'outil inférieur (9) sont orientés de manière à être décalés parallèlement et
- **en ce que**, lorsqu'un corps d'outil (39) est réalisé en tant que poinçon de découpage, l'outil supérieur (11) et/ou l'outil inférieur (9) sont déplacés l'un vers l'autre par un mouvement de course et le poinçon de découpage est placé sur un premier corps abrasif (242, 243) de l'outil abrasif (241) et qu'en particulier une forme arrondie prise par la face frontale de poinçon (43) de l'outil d'usinage (39) est soumise à une opération d'usinage et
- **en ce que** de préférence la face frontale de poinçon (43) du corps d'outil (39) est soumise à une opération de finition à l'aide d'au moins un autre corps abrasif (242, 243) de l'outil abrasif (241)

16. Procédé selon l'une quelconque des revendications 12 à 15, **caractérisé en ce que** le corps d'outil (39) réalisé en tant que poinçon de découpage est amené à un corps abrasif (244) de l'outil abrasif (241) pourvu d'une surface de travail orientée de manière radiale et **en ce qu'**une surface latérale (44) du corps d'outil (39) est soumise à une opération d'usinage.

17. Procédé selon l'une quelconque des revendications 12 à 14, **caractérisé en ce que** l'outil supérieur (11) et/ou l'outil inférieur (9) sont, à partir d'une position d'usinage, déplacés l'un par rapport à l'autre le long des axes de positionnement (16, 25) de telle sorte que lesdits axes de positionnement (16, 25) sont décalés parallèlement l'un par rapport à l'autre jusqu'à ce qu'un élément d'espacement (252) du racleur (250) soit positionné à l'extérieur du corps de base (49) de l'outil inférieur (9) et **en ce qu'**ensuite un mouvement de course de l'outil supérieur (11) et/ou de l'outil inférieur (9) est initié, grâce auquel l'outil abrasif (241) prévu sur le racleur (250) vient prendre appui contre un corps de contre-outil (93) de l'outil inférieur (9).
